# EUROPEAN PATENT APPLICATION

(11) **EP 4 507 239 A1**
(43) Date of publication of application: **12.02.2025**
(21) Application number: 24192621.1
(22) Date of filing: 02.08.2024
(51) Int. Cl.: H04L 5/00, H04W 72/1268, H04W 72/21, H04W 72/23

(54) **ENHANCING MULTIPLE CONFIGURED GRANT DESIGN FOR UPLINK AND SUPPLEMENTARY UPLINK**

(30) Priority: 11.08.2023 US 202363532251 P; 29.07.2024 US 202418786973
(71) Applicant: Apple Inc., Cupertino, CA 95014 (US)
(72) Inventor: YANG, Weidong, Cupertino, 95014 (US); BHAMRI, Ankit, Cupertino, 95014 (US); YAO, Chunhai, Cupertino, 95014 (US); WU, Dan, Cupertino, 95014 (US); ZHANG, Dawei, Cupertino, 95014 (US); HE, Hong, Cupertino, 95014 (US); ZENG, Wei, Cupertino, 95014 (US)
(74) Representative: Wardle, Callum Tarn

(57) **Abstract**

Disclosed are methods, systems, and computer-readable medium to perform operations including: obtaining a first configured grant (CG) configuration for an uplink (UL) carrier and a second CG configuration for a supplementary uplink (SUL) carrier, each of the first and second CG configurations comprising multiple transmission occasions, generating at least one unused transmission occasion uplink control information (UTO-UCI), the at least one UTO-UCI indicating which of the multiple transmission occasions are unused by a user equipment (UE) for each of the first CG configuration and the second CG configuration, and instructing radio frequency (RF) circuitry to transmit the at least one UTO-UCI to an access node.

## Description

### CROSS-REFERENCE TO RELATED APPLICATIONS

This application claims priority to U.S. Provisional Patent Application No. 63/532,251, filed August 11, 2023, which is incorporated herein by reference in its entirety.

### BACKGROUND

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5G NR). The wireless communication networks facilitate mobile broadband service using technologies such as OFDM, multiple input multiple output (MIMO), advanced channel coding, massive MIMO, beamforming, and/or other features.

### SUMMARY

The present disclosure provides techniques for enhancing configured grant (CG) design to support multiple physical uplink shared channel (PUSCH) CG configurations on normal uplink (NUL) and supplemental uplink (SUL) carriers. In particular, techniques for signaling unused transmission occasion(s) (UTOs) via uplink control information (UCI) for multiple NUL and SUL CG configurations are described. The present disclosure also provides improvements to network scheduling behavior based on the UTO-UCI signaling. Techniques for improving the detection of overlap among NUL and SUL CG transmissions and handling overlapping transmissions and signaling are also described.

In general, in a first aspect of the present disclosure, one or more processors are configured to perform operations including: obtaining a first configured grant (CG) configuration for an uplink (UL) carrier and a second CG configuration for a supplementary uplink (SUL) carrier, each of the first and second CG configurations including multiple transmission occasions, generating at least one unused transmission occasion uplink control information (UTO-UCI), the at least one UTO-UCI indicating which of the multiple transmission occasions are unused by a user equipment (UE) for each of the first CG configuration and the second CG configuration, and instructing radio frequency (RF) circuitry to transmit the at least one UTO-UCI to an access node.

In a second aspect combinable with the first aspect, the at least one UTO-UCI includes a first UTO-UCI indicating one or more unused transmission occasions for the first CG configuration, and a second UTO-UCI indicating one or more unused transmission occasions for the second CG configuration, where the second UTO-UCI is independent of the first UTO-UCI.

In a third aspect combinable with the first or second aspects, the one or more processors are configured to perform operations including: generating a first UTO-UCI for the first CG configuration, instructing the RF circuitry to transmit, to the access node, the first UTO-UCI using a first CG PUSCH transmission in the first CG configuration to indicate to the access node which of the transmission occasions are unused by the UE for the first CG configuration, generating a second UTO-UCI for the second CG configuration, where the second UTO-UCI is independent of the first UTO-UCI of the first CG configuration, and instructing the RF circuitry to transmit, to the access node, the second UTO-UCI using a second CG PUSCH transmission in the second CG configuration to indicate to the access node which of the transmission occasions are unused by the UE for the second CG configuration.

In a fourth aspect combinable with any of the first through third aspects, the at least one UTO-UCI includes a first UTO-UCI indicating one or more unused transmission occasions for one of the first CG configuration or the second CG configuration, and where the first UTO-UCI restricts which of the transmission occasions the other of the first CG configuration or the second CG configuration can be used by the UE.

In a fifth aspect combinable with any of the first through fourth aspects, the one or more processors are configured to perform operations including: determining that a first transmission occasion for one of the first CG configuration or the second CG configuration is unused by the UE, identifying a second transmission occasion for the other of the first CG configuration or the second CG configuration that overlaps with the first transmission occasion, determining that the second transmission occasion for the other of the first CG configuration or the second CG configuration is unused by the UE, and generating the at least one UTO-UCI based in part on the determination that the first and second transmission occasions are unused by the UE.

In a sixth aspect combinable with any of the first through fifth aspects, the first CG configuration at least partially overlaps the second CG configuration.

In a seventh aspect combinable with any of the first through sixth aspects, an overlap between the first CG configuration and the second CG configuration is determined at an orthogonal frequency division multiplexing (OFDM) symbol level.

In an eighth aspect combinable with any of the first through seventh aspects, an overlap between the first CG configuration and the second CG configuration is determined based on a superset that contains a transmission occasion of at least one of the first CG configuration or the second CG configuration.

In a ninth aspect combinable with any of the first through eighth aspects, an overlap between the first CG configuration and the second CG configuration is determined at a slot level of the UL carrier or a slot level of the SUL carrier.

In a tenth aspect combinable with any of the first through ninth aspects, an overlap between the first CG configuration and the second CG configuration is determined at a slot level of the UL carrier or SUL carrier associated with a smallest subcarrier spacing.

In an eleventh aspect combinable with any of the first through tenth aspects, an overlap between the first CG configuration and the second CG configuration is determined based on a union of OFDM symbols sets.

In a twelfth aspect combinable with any of the first through eleventh aspects, an overlap between the first CG configuration and the second CG configuration is determined based on a superset that contains a transmission occasion of one of the first CG configuration or the second CG configuration, where the superset is applied to only one of the first CG configuration or the second CG configuration.

In a thirteenth aspect combinable with any of the first through twelfth aspects, an overlap between the first CG configuration and the second CG configuration is determined based on at least one of network configuration, specification design, or capabilities of the UE.

In a fourteenth aspect combinable with any of the first through thirteenth aspects, the at least one UTO-UCI is transmitted to the access node using a CG physical uplink shared channel (PUSCH) transmission.

In general, in a fifteenth aspect, one or more processors are configured to perform operations including: instructing RF circuitry to transmit, to a UE, a first CG configuration for an UL carrier and a second CG configuration for a SUL carrier, each of the first and second CG configurations comprising multiple transmission occasions, receiving at least one UTO-UCI, the at least one UTO-UCI indicating one or more unused transmission occasions, and determining, based on the at least one UTO-UCI, which of the transmission occasions are unused by the UE for the first CG configuration and the second CG configuration.

In a sixteenth aspect combinable with the fifteenth aspect, the at least one UTO-UCI includes a first UTO-UCI indicating one or more unused transmission occasions for the first CG configuration, and a second UTO-UCI indicating one or more unused transmission occasions for the second CG configuration, the second UTO-UCI being independent of the first UTO-UCI.

In a seventeenth aspect combinable with the fifteenth or sixteenth aspects, the one or more processors are configured to perform operations including: receiving a first CG PUSCH transmission in the first CG configuration, the first CG PUSCH transmission including a first UTO-UCI for the first CG configuration, determining, based on the first UTO-UCI, which of the transmission occasions are unused by the UE for the first CG configuration, receiving a second CG PUSCH transmission in the second CG configuration, the second CG PUSCH transmissions including a second UTO-UCI that is independent of the first UTO-UCI, and determining, based on the second UTO-UCI, which of the transmission occasions are unused by the UE for the second CG configuration.

In an eighteenth aspect combinable with any of the fifteenth through seventeenth aspects, the at least one UTO-UCI includes a first UTO-UCI indicating one or more unused transmission occasions for one of the first CG configuration or the second CG configuration, and the first UTO-UCI restricts which of the transmission occasions the other of the first CG configuration or the second CG configuration can be used by the UE.

In a nineteenth aspect combinable with any of the fifteenth through eighteenth aspects, the first CG configuration at least partially overlaps the second CG configuration.

In a twentieth aspect combinable with any of the fifteenth through nineteenth aspects, an overlap between the first CG configuration and the second CG configuration is determined at an OFDM symbol level.

In a twenty-first aspect combinable with any of the fifteenth through twentieth aspects, an overlap between the first CG configuration and the second CG configuration is determined based on a superset that contains a transmission occasion of at least one of the first CG configuration or the second CG configuration.

In a twenty-second aspect combinable with any of the fifteenth through twenty-first aspects, an overlap between the first CG configuration and the second CG configuration is determined at a slot level of the UL carrier or a slot level of the SUL carrier.

In a twenty-third aspect combinable with any of the fifteenth through twenty-second aspects, an overlap between the first CG configuration and the second CG configuration is determined at a slot level of the UL carrier or SUL carrier associated with a smallest subcarrier spacing.

In a twenty-fourth aspect combinable with any of the fifteenth through twenty-third aspects, an overlap between the first CG configuration and the second CG configuration is determined based on a union of OFDM symbols sets.

In a twenty-fifth aspect combinable with any of the fifteenth through twenty-fourth aspects, an overlap between the first CG configuration and the second CG configuration is determined based on a superset that contains a transmission occasion of one of the first CG configuration or the second CG configuration, and the superset is applied to only one of the first CG configuration or the second CG configuration.

In a twenty-sixth aspect combinable with any of the fifteenth through twenty-fifth aspects, an overlap between the first CG configuration and the second CG configuration is determined based on at least one of a configuration signal transmitted to the UE by the access node, specification design, or capabilities of the UE.

In a twenty-seventh aspect combinable with any of the fifteenth through twenty-sixth aspects, the at least one UTO-UCI is received via a CG physical uplink shared channel (PUSCH) transmission.

In general, in a twenty-eighth aspect, a device (e.g., a UE or access node) includes one or more processors and memory storing instructions executable by the one or more processors to cause the one or more processors to perform the operations of any of the first through twenty-seventh aspects.

In general, in a twenty-ninth aspect, a system includes one or more processors and memory storing instructions executable by the one or more processors to cause the one or more processors to perform the operations of any of the first through twenty-seventh aspects.

In general, in a thirtieth aspect, one or more non-transitory computer-readable storage media store instructions executable by one or more processors to cause the one or more processors to perform the operations of any of the first through twenty-seventh aspects.

In general, a thirty-first aspect includes a method for performing the operations of any of the first through twenty-seventh aspects.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates a wireless network, according to some implementations.
FIG. 2 illustrates a timeline of a physical downlink control channel and a PUSCH, according to some implementations.
FIG. 3 illustrates three TDRA design choices, according to some implementations.
FIG. 4 illustrates transmission timelines for the unlicensed and licensed spectrums using a harmonized design, according to some implementations.
FIG. 5 illustrates a series of PUSCH transmissions for a CG configuration, according to some implementations.
FIGS. 6 and 7 illustrate example bitmaps for UTO-UCI, according to some implementations.
FIG. 8 illustrates a CG configuration timeline, according to some implementations.
FIG. 9 illustrates two CG configurations utilizing independent UTO, according to some implementations.
FIG. 10 illustrates two CG configurations utilizing a single UTO indication for both CG configurations, according to some implementations.
FIGS. 11 and 12 illustrate flowcharts of example methods, according to some implementations.
FIG. 13 illustrates an example user equipment (UE), according to some implementations.
FIG. 14 illustrates an example access node, according to some implementations.

### DETAILED DESCRIPTION

Recently, the 3GPP telecommunication standards have been expanded to support extended reality (XR) use cases, including augmented reality (AR), virtual reality (VR), and mixed reality (MR). These XR use cases typically feature audio and video content transmitted at periodic schedules. Due to its periodic nature, a configured grant (CG) design has been adopted for uplink XR traffic transmitted by a user equipment (UE) to a network.

However, there are several differences between XR traffic and conventional cellular traffic that make the current CG design inefficient for XR use cases. Unlike conventional cellular traffic, uplink XR traffic uses adjustable frame sizes that may vary significantly depending on the amount of data to be transmitted. Since the current CG design does not support a change in the size of configured resources, the network needs to over provision resources to the UE based on the largest expected frame size. This results in wasted resources when the UE only has smaller frames to transmit.

To enhance the efficiency of CG design for XR use cases, a UE can indicate to the network unused transmission occasion(s) (UTOs) for a CG configuration. For example, for a CG physical uplink shared channel (PUSCH) configuration, a UE can include uplink control information (UCI) that provides information about unused CG PUSCH transmission occasions in each CG PUSCH that is transmitted. For convenience, the term "UTO-UCI" is used to refer to the UCI that provides information about unused CG PUSCH transmission occasions. In some examples, the UTO-UCI provides a bitmap in which a bit corresponds to a TO within a time duration/range. The bit indicates whether the TO is "unused."

In some instances, a UE may be configured with multiple CG configurations. For example, in some wireless communication networks, such as those designed in accordance with the 3GPP 5G NR standard, the network can configure both a normal uplink carrier (NUL) and a supplementary uplink carrier (SUL) for a UE at a given uplink cell, if supported by UE capability. The transmission of PUSCH transmissions over either NUL or SUL may depend on the nature of traffic and/or signaling. For example, SUL transmission tends to be more reliable and has a larger coverage area than NUL transmission. However, since SUL is typically associated with a lower carrier frequency (e.g., 700 MHz) than that of NUL (e.g., 3.5 GHz), the channel bandwidth (and, therefore, the configurable bandwidth part (BWP) bandwidth) tends to be smaller. On the other hand, NUL transmission tends to be less reliable and has a smaller coverage than SUL transmission, but the channel bandwidth (and configurable BWP bandwidth) tends to be larger, which is conducive to quick transmission of data.

By configuring a UE with both NUL and SUL CG configurations, the network can exploit the above-noted characteristics when making scheduling decisions and configurations for uplink XR traffic and other transmissions. However, it has not yet been determined whether or how to reconcile transmissions and UTO-UCI signaling among multiple NUL and SUL CG configurations.

The present disclosure describes techniques for enhancing CG design for XR and other traffic to support multiple PUSCH CG configurations on NUL and SUL. In particular, the disclosure describes techniques for dependent and independent UTO-UCI signaling for multiple NUL and SUL CG configurations. The present disclosure also provides ways in which a network can improve its scheduling behavior based on the UTO-UCI signaling. Techniques for improving the detection of overlap among NUL and SUL CG transmissions and handling overlapping transmissions and signaling are also described.

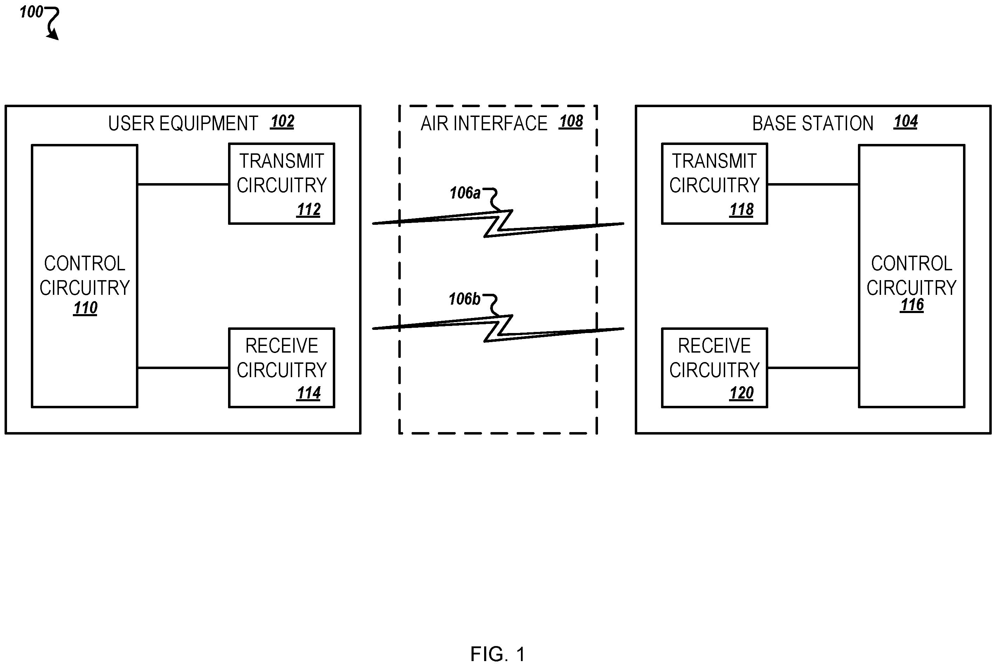

FIG. 1 illustrates a wireless network 100, according to some implementations. The wireless network 100 includes a UE 102 and a base station 104 connected via one or more channels 106A, 106B across an air interface 108. The UE 102 and base station 104 communicate using a system that supports controls for managing the access of the UE 102 to a network via the base station 104.

In some implementations, the wireless network 100 is a Standalone (SA) network that incorporates Fifth Generation (5G) New Radio (NR) communication standards as defined by the Third Generation Partnership Project (3GPP) technical specifications. In other implementations, the wireless network 100 is a Non-Standalone (NSA) network that incorporates Long Term Evolution (LTE) and 5G NR communication standards. For example, the wireless network 100 may be a E-UTRA (Evolved Universal Terrestrial Radio Access)-NR Dual Connectivity (EN-DC) network, or an NR-EUTRA Dual Connectivity (NE-DC) network. Furthermore, other types of communication standards are possible, including future 3GPP systems (e.g., Sixth Generation (6G)), Institute of Electrical and Electronics Engineers (IEEE) 802.11 technology, or the like. While aspects may be described herein using terminology commonly associated with 5G NR, aspects of the present disclosure can be applied to other systems, such as systems subsequent to 5G (e.g., 6G).

In the wireless network 100, the UE 102 and any other UE in the system may be, for example, any of laptop computers, smartphones, tablet computers, machine-type devices such as smart meters or specialized devices for healthcare, intelligent transportation systems, or any other wireless device. In network 100, the base station 104 provides the UE 102 network connectivity to a broader network (not shown). This UE 102 connectivity is provided via the air interface 108 in a base station service area provided by the base station 104. In some implementations, such a broader network may be a wide area network operated by a cellular network provider, or may be the Internet. Each base station service area associated with the base station 104 is supported by one or more antennas integrated with the base station 104. The service areas can be divided into a number of sectors associated with one or more particular antennas. Such sectors may be physically associated with one or more fixed antennas or may be assigned to a physical area with one or more tunable antennas or antenna settings adjustable in a beamforming process used to direct a signal to a particular sector.

The UE 102 includes control circuitry 110 coupled with transmit circuitry 112 and receive circuitry 114. The transmit circuitry 112 and receive circuitry 114 may each be coupled with one or more antennas. The control circuitry 110 may include various combinations of application-specific circuitry and baseband circuitry. The transmit circuitry 112 and receive circuitry 114 may be adapted to transmit and receive data, respectively, and may include radio frequency (RF) circuitry and/or front-end module (FEM) circuitry.

In various implementations, aspects of the transmit circuitry 112, receive circuitry 114, and control circuitry 110 may be integrated in various ways to implement the operations described herein. The control circuitry 110 may be adapted or configured to perform various operations, such as those described elsewhere in this disclosure related to a UE. For instance, the control circuitry 110 can generate UTO-UCI signaling and test for overlap among transmission occasions in NUL and SUL CG configurations, as described herein.

The transmit circuitry 112 can perform various operations described in this specification. For example, the transmit circuitry 112 can transmit CG PUSCH transmissions and UTO-UCI signaling to an access node (e.g., base station). Additionally, the transmit circuitry 112 may transmit using a plurality of multiplexed uplink physical channels. The plurality of uplink physical channels may be multiplexed, e.g., according to time division multiplexing (TDM) or frequency division multiplexing (FDM) along with carrier aggregation. The transmit circuitry 112 may be configured to receive block data from the control circuitry 110 for transmission across the air interface 108.

The receive circuitry 114 can perform various operations described in this specification. For instance, the receive circuitry 114 can receive NUL and SUL CG configurations from an access node. Additionally, the receive circuitry 114 may receive a plurality of multiplexed downlink physical channels from the air interface 108 and relay the physical channels to the control circuitry 110. The plurality of downlink physical channels may be multiplexed, e.g., according to TDM or FDM along with carrier aggregation. The transmit circuitry 112 and the receive circuitry 114 may transmit and receive, respectively, both control data and content data (e.g., messages, images, video, etc.) structured within data blocks that are carried by the physical channels.

FIG. 1 also illustrates the base station 104. In some implementations, the base station 104 may be a 5G radio access network (RAN), a next generation RAN, a E-UTRAN, a non-terrestrial cell, or a legacy RAN, such as a UTRAN. As used herein, the term "5G RAN" or the like may refer to the base station 104 that operates in an NR or 5G wireless network 100, and the term "E-UTRAN" or the like may refer to a base station 104 that operates in an LTE or 4G wireless network 100. The UE 102 utilizes connections (or channels) 106A, 106B, each of which includes a physical communications interface or layer.

The base station 104 circuitry may include control circuitry 116 coupled with transmit circuitry 118 and receive circuitry 120. The transmit circuitry 118 and receive circuitry 120 may each be coupled with one or more antennas that may be used to enable communications via the air interface 108. The transmit circuitry 118 and receive circuitry 120 may be adapted to transmit and receive data, respectively, to any UE connected to the base station 104. The receive circuitry 120 may receive a plurality of uplink physical channels from one or more UEs, including the UE 102.

In FIG. 1, the one or more channels 106A, 106B are illustrated as an air interface to enable communicative coupling, and can be consistent with cellular communications protocols, such as a 5G protocol, a NR protocol, an NR-based access to unlicensed spectrum (NR-U) protocol, and/or any other communications protocol(s). In implementations, the UE 102 may directly exchange communication data via a ProSe interface. The ProSe interface may alternatively be referred to as a sidelink (SL) interface and may include one or more logical channels, including but not limited to a Physical Sidelink Control Channel (PSCCH), a Physical Sidelink Discovery Channel (PSDCH), and a Physical Sidelink Broadcast Channel (PSBCH).

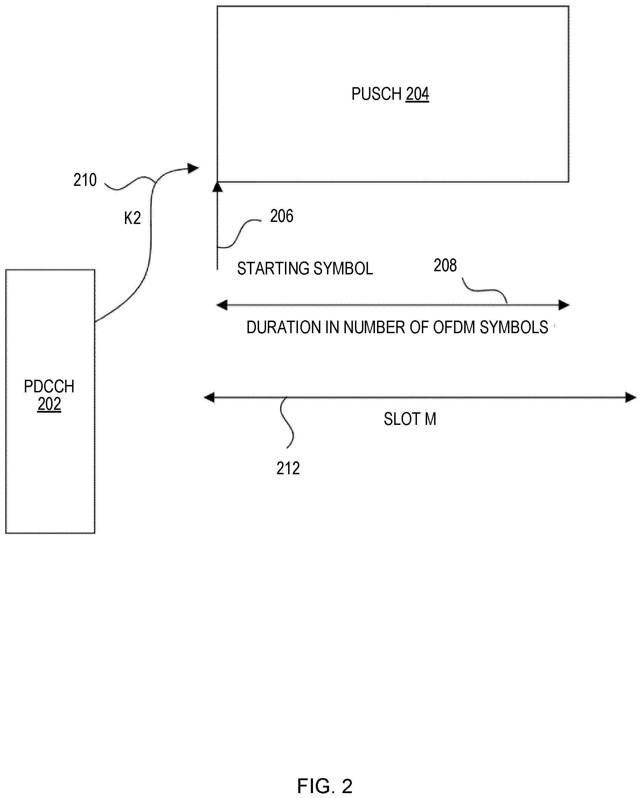

FIG. 2 illustrates a timeline of a physical downlink control channel (PDCCH) 202 and a PUSCH 204. Time-Domain Resource Allocation (TDRA) design for PUSCH 204 is about the determination of the starting symbol 206, the duration 208 of the PUSCH 204, the slot offset 210 (K2) with respect to the PDCCH 202, and the slot duration 212. The starting symbol 206 may not always be the beginning of the slot. A UE may determine these variables for a successful PUSCH transmission.

There are multiple design choices for TDRA. Further, in some examples the TDRA design choice for the unlicensed spectrum may be different than the licensed spectrum. Accordingly, it may be desirable to harmonize different design choices.

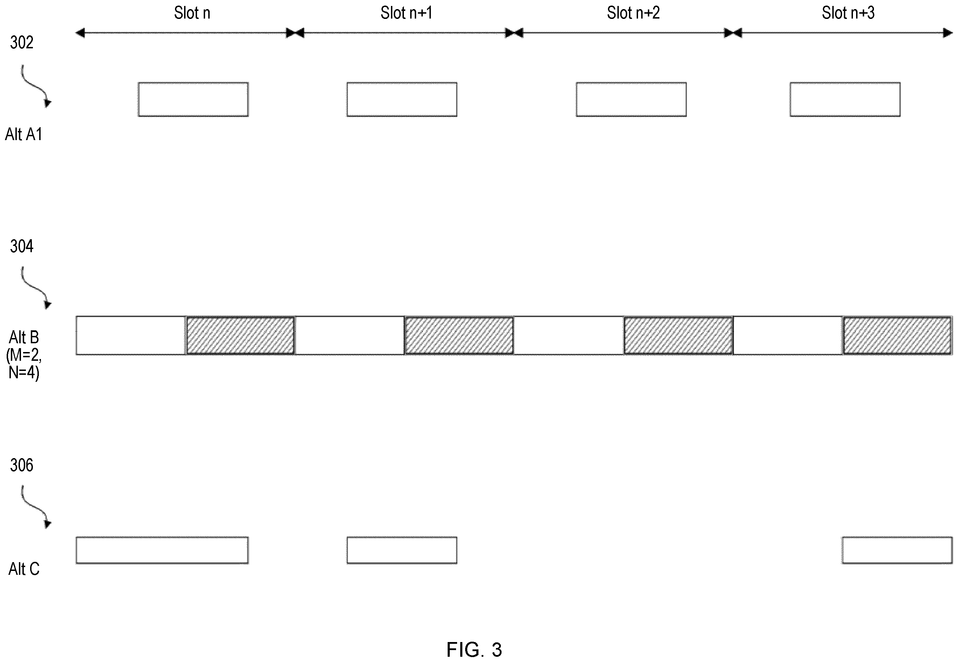

FIG. 3 illustrates three TDRA design choices. In the illustrated example, each of the three design choices are shown with PUSCH transmission occasions mapped to four slots of a CG period.

In a first design choice, Alt A1 302, the TDRA determination may be based on repetition framework. The maximum number of PUSCHs (N) may be configured by higher layers or indicated by activation DCI. The starting symbol (S) and the allocation length (L) may be indicated jointly as Start and Length Indicator Value (SLIV). A single SLIV may be determined from TDRA. The same SLIV may be used in N PUSCH in consecutive slots per CG period. As shown, in Alt A1 302 the PUSCH transmission occasions may have the same start symbol and duration across the slots.

In a second design choice, Alt B 304, the TDRA determination may be based on an NR-U framework. For Alt B 304, N may be configured by higher layers. Additionally, Alt B 304 allows for consecutive PUSCH transmission occasions to occur in a single slot. There may be M consecutive PUSCH transmission occasions with same duration in slot. M may be configured by higher layers. The M PUSCH transmission occasions may be used in N consecutive slots per CG period. N and M may be configured independently from *cg-nrofSlots-r16* and *cg-nrofPUSCH-InSlot-r16,* respectively. M and N configuration may be independent from *cgRetransmissionTimer* configuration. A single SLIV may be determined from TDRA. The SLIV may be determined by the SLIV used for first PUSCH per CG period. As shown, in Alt B 304 there may be no gaps between PUSCH transmission occasions. This may be preferable for the unlicensed spectrum to ensure devices are able to identify occupied channels.

In the third design choice, Alt C 306, a single DCI scheduling may be used for multiple PUSCHs. The TDRA may be configured by *pusch-TimeDomainAllocationListForMultiPUSCH-r16* with *extendedK2-r17.* A row of TDRA with N entries may determine the time domain resources allocation of N PUSCH transmission occasions per period. The N PUSCH transmission occasions can be non-consecutive PUSCHs and/or in non-consecutive slots. Alt C 306 provides a lot of flexibility. The starting symbol, ending symbol, and duration of each PUSCH transmission occasion may be different, the slots where PUSCH transmission occasions are located can be different. Further, there may be unused slots.

As shown, these TDRA choices operate differently. The use of consecutive and non-consecutive slots may be different. For example, for both Alt A1 302 and Alt B 304, if the number of used slot(s) is more than one, consecutive slots are used. In contrast, Alt C 306 can use non-consecutive slots. The gap between PUSCHs may also be different. For both Alt A1 302 and Alt C 306, a gap between PUSCHs is allowed, but Alt B 304 does not allow a gap between PUSCHs (due to, e.g., listen before talk (LBT) considerations). Further the design choices may handle the duration of the PUSCH differently. For example, Alt C 306 allows different durations for PUSCHs, whereas the durations of each of the PUSCHs are identical in Alt A1 302 and Alt B 304.

In some examples, one or more of these TDRA designs may be harmonized for more efficient use. For example, Alt A1 302 can be subsumed under Alt B 304. Accordingly, additional focus can be on the harmonization of Alt B 304 and Alt C 306. In 3GPP Release-16, for unlicensed spectrum access, essentially Alt B 304 was used considering the LBT requirement of the unlicensed spectrum access. It may therefore be preferred that the same design is retained for unlicensed spectrum access. However, it may be advantageous to include some of the flexibility of ALT C 306. In some examples, PUSCH repetition is supported with multiple PUSCH transmissions in a CG period. For example, if there are 4 TOs in a CG period, the first two TOs may be for a same transport block, and the second two TOs may be for another transport block. When PUSCH repetition is supported, e.g., over licensed spectrum, to reduce signaling overhead and also to achieve consistent low block error rate, the invalid PUSCH TOs are not considered in the repetition pattern design. For example, with 4 configured TOs in a CG period, TO_1, TO_2, TO_3 and TO_4, and TO_2 is an invalid PUSCH TO, then the PUSCH repetition for a transport block may use TO_1 and TO_3. The HARQ redundancy version sequence such as [0 3] or [0 3 2 1] can be configured by the network to the UE for a CG configuration, the configuration of the HARQ redundancy version sequence may be under the same IE for configuring multiple PUSCHs in a CG configuration or a separate IE. Should the IE configuring the HARQ redundancy version sequence not be present for a CG configuration, then PUSCH repetition is not supported for that CG configuration. In some examples, for licensed spectrum and unlicensed spectrum, a UE-indicated HARQ redundancy version for a PUSCH is carried in uplink control information (UCI). As more than one transport block may be carried within a CG period, NDI (New Data Indication) in UCI may be introduced to help network determine the association between PUSCHs and transport blocks. To reduce signaling overhead and avoid the introduction of NDI in UCI, each new transport block may start with HARQ redundancy version 0, and subsequent transmissions may not use HARQ redundancy version 0 to avoid confusion at the network side. It is also possible to toggle the NDI bit to signify the same or different transport block is carried as the preceding PUSCH transmission. Note that in this case, the NDI signaling design can be utilized across CG periods, e.g., by using the same NDI value for consecutive valid TO(s) in one or more CG period, the UE can transmit the same transport block over them. For UCI multiplexing, HARQ redundancy version and/or NDI for the current PUSCH can be multiplexed with UTO-UCI. In some examples, HARQ redundancy version and/or NDI for the current PUSCH can be multiplexed with UTO-UCI and HARQ-ACK.

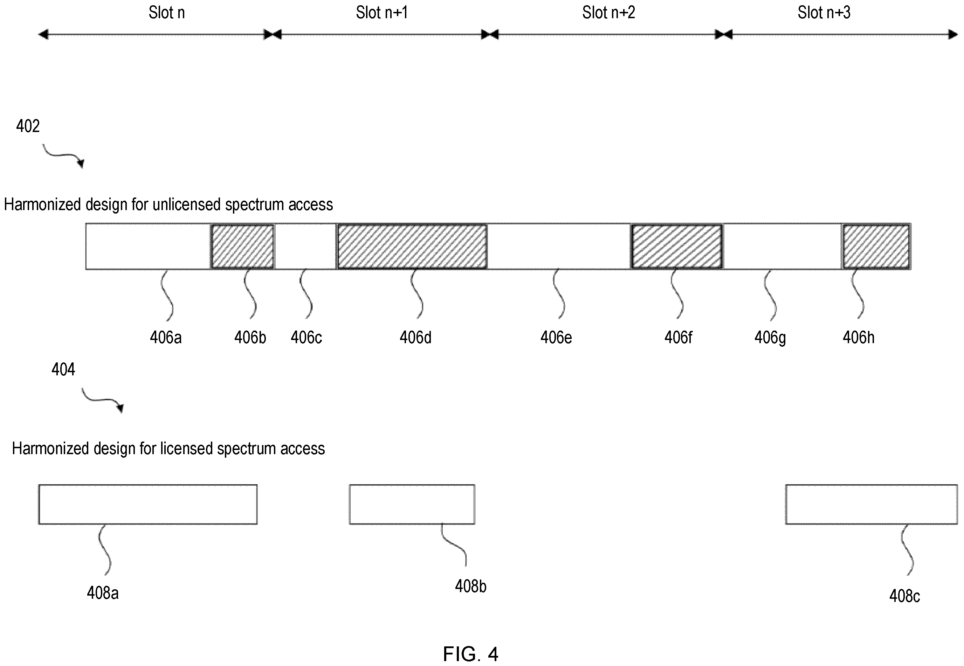

Accordingly, in some examples, a transmission schedule without gaps may include flexibility regarding the starting symbol, ending symbol, and duration of each PUSCH transmission occasion. In some examples, for unlicensed spectrum access, even if Alt C 306 is used, no gap is allowed between different PUSCHs. Accordingly, PUSCHs may have different durations, but there is no gap between them. For example, FIG. 4 provides an illustration of a way to harmonize Alt B 304 and Alt C 306.

FIG. 4 illustrates a transmission timeline 402 for the unlicensed spectrum and a transmission timeline 404 for the licensed spectrum using a harmonized design. As shown, the transmission timeline 404 for the licensed spectrum features the TDRA design of ALT C 306 of FIG. 3. As shown, the three PUSCH transmissions 408a, 408b, and 408c are non-consecutive PUSCHs and/or in non-consecutive slot. Further, the starting symbol, ending symbol, and duration of each PUSCH transmission occasion may be different.

In the illustrated example, the transmission timeline 402 for the unlicensed spectrum includes eight PUSCH transmissions 406a, 406b, 406c, 406d, 406e, 406f, 406g, and 406h with two PUSCH transmissions per slot. Like on the transmission timeline 404 for the licensed spectrum the starting symbol, ending symbol, and duration of each PUSCH transmission occasion may be different. The harmonized TDRA design in the unlicensed spectrum may include multiple PUSCH transmissions in a single slot. The PUSCH transmissions within a slot and across slots do not have gaps between them, but are flexible regarding with the starting symbol, ending symbol, and duration. In some examples, there may be a fixed number of PUSCH transmission occasions in a slot as in Alt. B, yet the slots where PUSCH transmission occasions are located are not constrained to be consecutive ones, for example there can be N slots with M transmission occasions in a slot, but their slot indexes may not be consecutive, such as 0, 2, 3, ..... For Type 2 CG PUSCH configuration activation, this may be also formulated as the slot offsets may not be consecutive for those slots. For unlicensed spectrum, the slot offsets/slot indexes are constrained to be consecutive to achieve the effect there is no gap between adjacent PUSCH transmission occasions. Alternatively or additionally, the OFDM symbols taken by TOs before checking the validity of any CG PUSCHs are contiguous.

UTO signaling may be enhanced in some examples. The UTO signaling may be a bitmap, in which a bit corresponds to a transmission occasion within a time duration/range. The bit indicates whether the transmission is unused. A UE may send the bitmap to an access node over PUSCH as a part of UCI. The access node may use the UTO signaling to make network scheduling decisions.

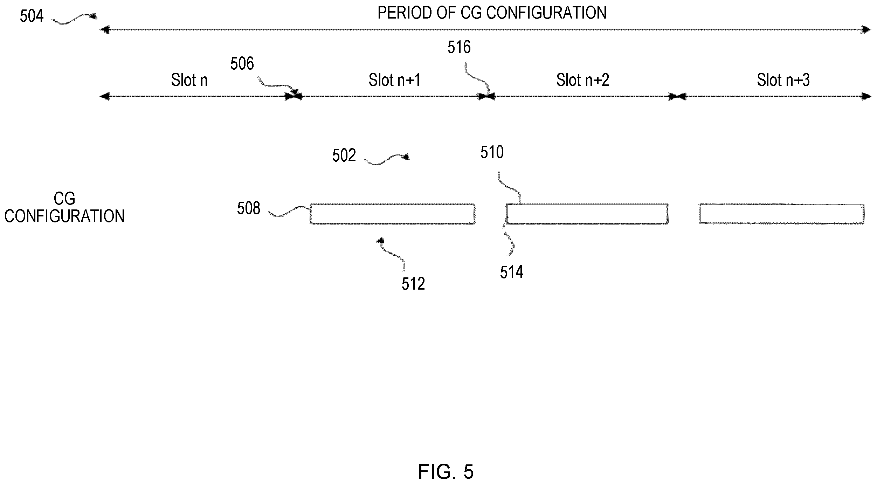

The design of the UTO-UCI may be based on certain factors. Specifically, in some examples, the UE may determine the UTO-UCI payload size and the timing reference for the UTO-UCI indication according to a time duration. In some examples, the UE may determine the UTO-UCI payload size and the timing reference for the UTO-UCI indication according to multiple CG periods. In some examples, the UE may determine the UTO-UCI payload size and the timing reference for the UTO-UCI indication according to range. FIGS. 5-8 provide examples of determining the payload size and the timing reference for the UTO-UCI.

FIG. 5 illustrates a series of PUSCH transmissions 502 for a CG configuration. The time reference and UTO-UCI payload size determination for the PUSCH transmissions 502 may be based on features of the CG configuration. There may be several choices for determining the applicable time duration or range (e.g., a number of transmission occasions (TOs)).

For example, the starting time for the UTO (also referred to as the time reference or reference time) may be based on events within the CG configuration. If an applicable time duration is used, the following are options for the bitmap starting time. In some examples, the starting time may be determined by the start time of a CG period per 504. In some examples, the starting time may be determined by the slot with an offset in a CG period (e.g., beginning of slot N+1 506, which contains the very first PUSCH transmission occasion or the very first valid PUSCH transmission occasion, in which a PUSCH transmission occasion is designated as "invalid" if the CG PUSCH for a PUSCH transmission occasion is dropped due to collision with DL symbol(s) indicated by *tdd-UL-DL-ConfigurationCommon* or *tdd-UL-DL-ConfigurationDedicated* or SSB). In some examples, the starting time may be determined by the starting time of the PUSCH 508 in the first TO in a CG period. In some examples, the starting time may be determined by the starting time of the PUSCH 508 in the first TO for a non-invalid CG PUSCH in a CG period. In some examples, the starting time may be determined by the starting time of the PUSCH carrying the UTO-UCI. For example, if the second PUSCH 510 is carrying the UTO-UCI and the first PUSCH 512 is not, then the starting time 514 of the second PUSCH 510 may be used for the starting time of the UTO. Similar, the starting time may be determined by the starting time of the PUSCH carrying the UTO-UCI (e.g., starting time 516 of PUSCH in slot n+2 if it is the PUSCH carrying UTO-UCI.).

Determination of the UTO-UCI payload size (e.g., bitmap size) may be based on the maximum number of TOs contained in a time duration from a starting time. It may be noted that, depending on the starting time, the number of TOs enclosed in the time duration may be different. This is because changing the starting time causes the time duration window to slide, and at different points the time duration may include different number of TOs. Accordingly, the UTO-UCI payload size may vary based on time duration and starting time. In some examples, padding bits can be used to equalize the payload size if the payload size does not reach the maximum allowable payload size, which may be according to RRC configuration or determined indirectly through the number of the maximally allowed TOs in the UCI-UCI.

In some examples, the time duration may be an absolute time (e.g., 1 ms, 5 ms, 50/3 (=16.66....) ms), which may or may not equal one or multiple of the CG period(s). In some examples, the time duration may be a number of uplink slots. In some examples, the time duration may be the CG period. In some examples, the time duration may be multiple CG periods.

In some examples, the UTO-UCI bitmap size may be determined according to the number of TOs over a time duration. If the number of TOs over a time duration may vary due to different starting time, the bitmap size may be determined according to the maximum of the number of TOs over a duration with different starting time.

In some examples, the bitmap size may be RRC configured for a CG PUSCH configuration. One potential benefit with such a design is to ease UE implementation. In some examples, the bitmap size configured by RRC is according to the number of TOs which come after the TO within which the CG PUSCH carrying the UTO-UCI is located, each bit in the bitmap corresponds to such a TO. In another example, the bitmap size configured by RRC is according to the number of TOs which come after the TO within which the CG PUSCH carrying the UTO-UCI is located and those TOs are not associated with an invalid CG PUSCH, each bit in the bitmap corresponds to such a TO.

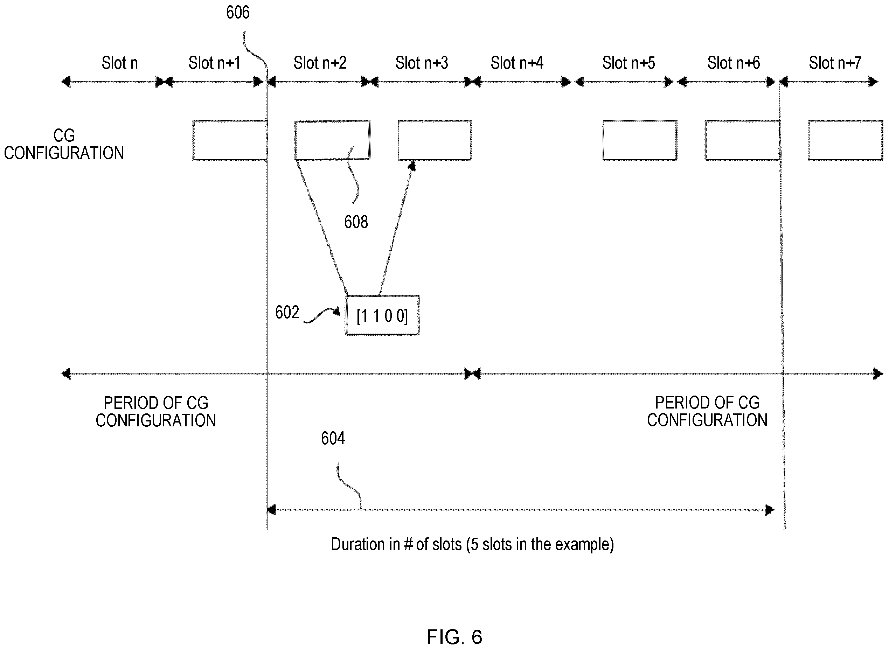

FIG. 6 illustrates a first example bitmap 602 for UTO-UCI. In the illustrated example, the starting time or timing reference for the UTO indication is determined by the starting time 606 of the slot of the PUSCH 608 containing the UTO-UCI. The time duration 604 of the UTO indication for the illustrated example is based on a number of uplink slots. In this example, the number of uplink slots for the time duration 604 is set to five.

The bitmap size may be determined based on the maximum number of TOs possible with the timing reference (e.g., starting time 606 of the slot of the PUSCH 608 containing the UTO-UCI) and the time duration 604 (e.g., five uplink slots). As shown, the timing reference and duration may result in a window of time that captures a number of TOs. In the illustrated example, there are four TOs in the time duration 604. Accordingly, the bitmap 602 is four bits. The first bit representing a first TO, the second bit representing a second TO, the third bit representing a third TO, and the fourth bit representing a fourth TO. A '1' bit may indicate that the UE plans to use the TO, and a '0' bit may indicate that the UE will not use the TO for the CG configuration. Note that in some examples, the initial bit may be excluded or omitted as it may be assumed that the PUSCH TO containing the UTO-UCI is used. In some examples, the initial bit is associated with a TO after the current PUSCH.

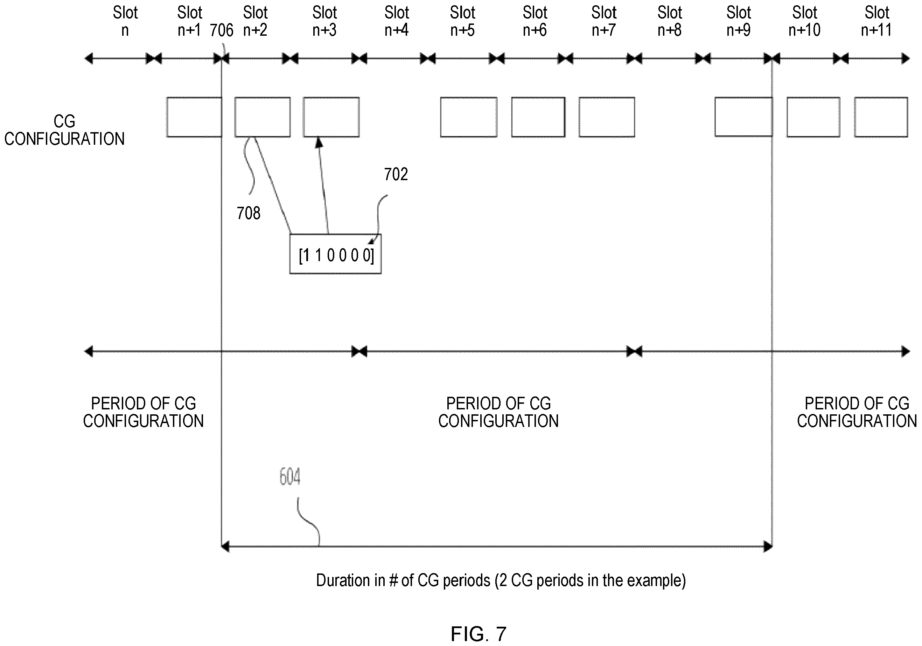

FIG. 7 illustrates a second example bitmap 702 for UTO-UCI. In the illustrated example, the starting time or timing reference for the UTO indication is determined by the starting time 606 of the slot of the PUSCH 708 containing the UTO-UCI. The time duration 704 of the UTO indication for the illustrated example is based on a number of CG periods. The number of CG periods for the time duration 704 is set to two in the illustrated example.

The bitmap size may be determined based on the maximum number of TOs possible with the timing reference (e.g., starting time 706 of the slot of the PUSCH 708 containing the UTO-UCI) and the time duration 704 (e.g., two CG periods), or with any timing reference at a given time duration. As shown, the timing reference and duration may result in a window of time that captures a number of TOs. In the illustrated example, there are six TOs in the time duration 704. Accordingly, the bitmap 702 is six bits. The first bit representing a first TO, the second bit representing a second TO, the third bit representing a third TO, the fourth bit representing a fourth TO, the fifth bit representing a fifth TO, and the sixth bit representing a sixth TO. A '1' bit may indicate that the UE plans to use the TO, and a '0' bit may indicate that the UE will not use the TO for the CG configuration.

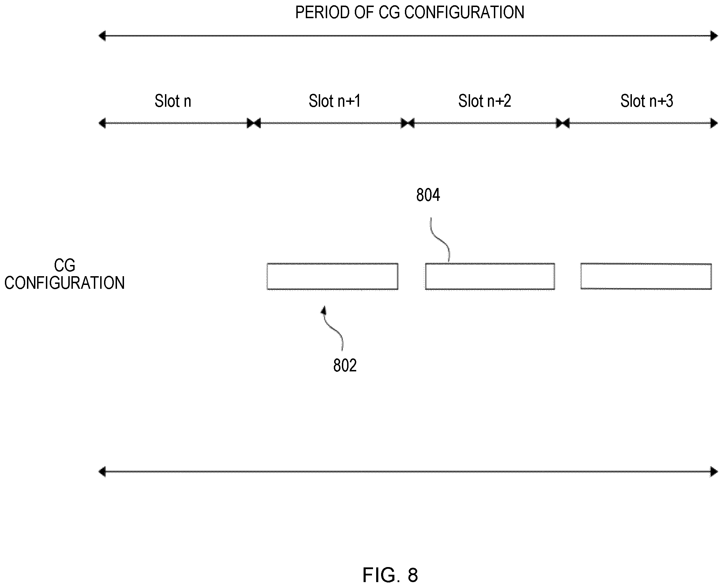

FIG. 8 illustrates a CG configuration timeline in accordance with some examples. In some examples, a TO may be used as a time reference for determining the bitmap size. There may be several choices for determining the applicable time duration or range (e.g., a number of TOs) included in a UTO-UCI bitmap. In some examples, the starting TO is the first TO 802. In some examples, the starting TO is the TO in which a CG PUSCH carrying UTO-UCI is transmitted. For example, if the CG PUSCH 804 in slot n+2 is the CG PUSCH carrying UTO-UCI, the starting TO used to determine the bitmap size would be CG PUSCH 804. The maximum number of TOs following a starting TO may determine the bitmap size. For instance, if there are a maximum of four TOs for a time duration following a starting TO, the bitmap size may be five. In some examples, the TO within which the CG PUSCH carrying the UTO-UCI is located is not included in the bitmap representation.

Since a CG can be configured on SUL, NUL, or both, the support of multiple PUSCH transmissions for a CG configuration should consider whether there is any dependence between the NUL CG configuration and the SUL CG configuration, and whether there is any dependence between UTO-UCI signaling for SUL and NUL. For example, since there can be UTO signaling for each CG configuration, it should be considered whether there should be any restriction and/or dependence among each CG configuration from a signaling generation perspective. In addition, it should be considered how the indicated UTO signaling affects CG prioritization. For example, if PUSCH transmissions from CG configuration 1 and CG configuration 2 overlap, the determination of how to multiplex their transmissions and/or UCI should be considered. A CG configuration can be associated with a physical layer 1 (L1) priority and L2 priority, so it should also be considered whether there should be any restriction and/or dependence among two CG configurations with different L1 priorities. Also, when a UE indicates (e.g., via UTO signaling) its intention for a TO to the network, it should be considered how such an indication interacts with the network's scheduling behavior, such as whether there should be any modification on the interaction between DG PUSCH and CG PUSCH. Lastly, the switching time between a NUL PUSCH and SUL PUSCH may not be zero, which introduces an additional constraint relative to, for example, multiple CG configurations configured on either NUL or SUL, but not both.

In accordance with an aspect of the present disclosure, there is no restriction or dependence between UTO signaling carried over PUSCHs for different CG configurations on SUL and NUL, at the same L1 priority or different L1 priorities. In this case, the UTO signaling reflects the buffer status or traffic arrival associated with an individual CG configuration. Since the traffic arrival, e.g., for XR video, or file upload, can be different, the indications from UTO signalings carried over PUSCHs for different CG configurations may not be consistent. Thus, by placing no restrictions on UTO signaling generation across CG configurations, consistence is maintained for UTO signalings generated at different TOs for the same CG configuration. In addition, CG PUSCH generation is not affected by the UTO signaling for another CG configuration at all. On the network side, the UTO signaling for a CG configuration may help reduce blind detection at the base station for CG PUSCHs with that CG configuration. For potential transmissions of CG PUSCHs with another CG configuration, blind detection may be needed. If there is no interruption on the uplink transmission on the CC of interest, then the indication of UTO signaling should remain valid for the UE. However, if there is interruption in the uplink transmission, then base station may need to provide DG PUSCH to quickly drain the buffered data.

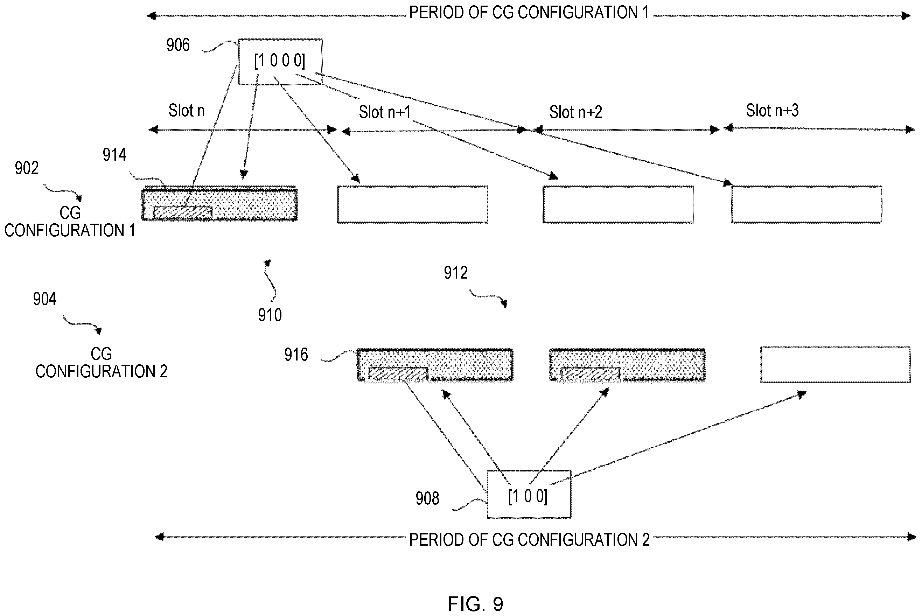

FIG. 9 illustrates two CG configurations (e.g., first CG configuration 902, such as a NUL CG configuration, and second CG configuration 904, such as a SUL CG configuration) utilizing independent UTO indications (e.g., first UTO indication 906 and second UTO indication 908). In the illustrated example, a first CG configuration 902 includes four TOs 910 in the CG period. The second CG configuration 904 includes three TOs 910 in the CG period. As shown, the periods and TOs of the first CG configuration 902 and the second CG configuration 904 overlap each other.

In the illustrated example, there is no restriction/dependence between UTO signaling carried over PUSCHs for different CG configurations at the same L1 priority or different L1 priorities. In this example, the UTO signaling (e.g., first UTO indication 906 and second UTO indication 908) reflects the buffer status or traffic arrival associated with an individual CG configuration. Since the traffic arrival (e.g., uplink XR traffic) can be different, the indications from UTO signaling carried over PUSCHs for different CG configurations may not be consistent. For instance, the first UTO indication 906 includes a bitmap that signals the used and unused TOs 910 of the first CG configuration 902, and the second UTO indication 908 includes a bitmap that signals the used and unused TOs 912 of the second CG configuration 904.

In this example, a PUSCH 914 for the first CG configuration 902 in slot n carries UTO signaling with a bitmap of [1000]. The bitmap [1000], with the reference slot starting from slot n, indicates slots n+1, n+2, n+3 are unused. In slot n+1, a PUSCH 916 for the second CG configuration 904 carries UTO signaling with a bitmap of [110]. The bitmap [110], with reference slot starting from slot n, indicates slot n+3 as unused, but slot n+1 & n+2 as "not unused"/"used". With this design option, the "unused" or "not unused"/"used" status indicated is particular to one or more period of a CG configuration, and bears no relevance to other CG configurations. However, from access node scheduling and blind detection of UTO signaling point of view, it may not be helpful because for slot n+2, if the access node schedules the resource vacated by the first CG configuration 902, there is no guarantee there won't be transmission for the UE of interest.

For the illustrated example, there may be no restriction on UTO signaling generation across CG configurations, while consistency may be maintained for UTO signalings generated at different TOs for the same CG configuration. For example, for the second CG configuration 904, the UTO UCI signaling (e.g., second UTO indication 908) may be sent on the PUSCH of both used TOs. The UTO signaling on each of the PUSCH TOs of the second CG configuration 904 are consistent. On the other hand, the UTO UCI signaling that is sent on the first CG configuration 902 (e.g., first UTO indication 906) may be different than the second UTO indication 908.

In some examples, CG PUSCH generation may not be affected by the UTO signaling for another CG configuration at all. For example, in the illustrated example, the first CG configuration 902 indicates that slots n+1, n+2, and n+3 are unused, but that indication does not affect the CG PUSCH generation for the second CG configuration 904. As shown, the UE sends a CG PUSCH on both slots n+1, n+2 for the second CG configuration 904.

In some examples, the UTO signaling may have an effect on an access node's blind detection behavior. The UTO signaling for a CG Configuration may help reduce blind detection at the access node for CG PUSCHs corresponding with that CG configuration. For potential transmissions of CG PUSCHs with another CG configuration, the access node may perform blind detection.

In some examples, the UTO signaling may have an effect on access node scheduling behavior. For example, if it is assumed that there is no interruption on the uplink transmission on the component carrier (CC) of interest (e.g., no dynamic Time Division Duplex (TDD) interaction such as DG PDSCH transmission, aperiodic (AP) CSI-RS transmission, etc.) then the indication of UTO signaling may remain valid for the UE. However, if there is interruption in the uplink transmission (e.g., some TOs deemed usable by the UE initially are not actually usable (e.g., due to dynamic TDD)) then the access node may provide DG PUSCH to quickly drain the buffered data.

In accordance with another aspect of the present disclosure, there is restriction and/or dependence between UTO signaling carried over PUSCHs for different CG configurations for SUL and NUL at the same L1 priority or different L1 priorities. In this case, the UTO signaling reflects the buffer status and/or traffic arrival associated for more than one CG configuration. For example, the UTO signaling can indicate that the referred slots are unused, or that the OFDM symbols covered by the CG PUSCH are unused, among other possibilities described herein. If two CG PUSCHs with two CG configurations overlap over an OFDM symbol, and the TO associated with either CG configuration's PUSCH is indicated as unused, then each OFDM symbol within the TO is deemed "unused" from the UE's point of view. In other words, the UTO signaling is used to indicate unused OFDM symbol(s) (or unused supersets, as described herein), and any CG PUSCH containing such an OFDM symbol (or within such a superset) will not be generated by the UE.

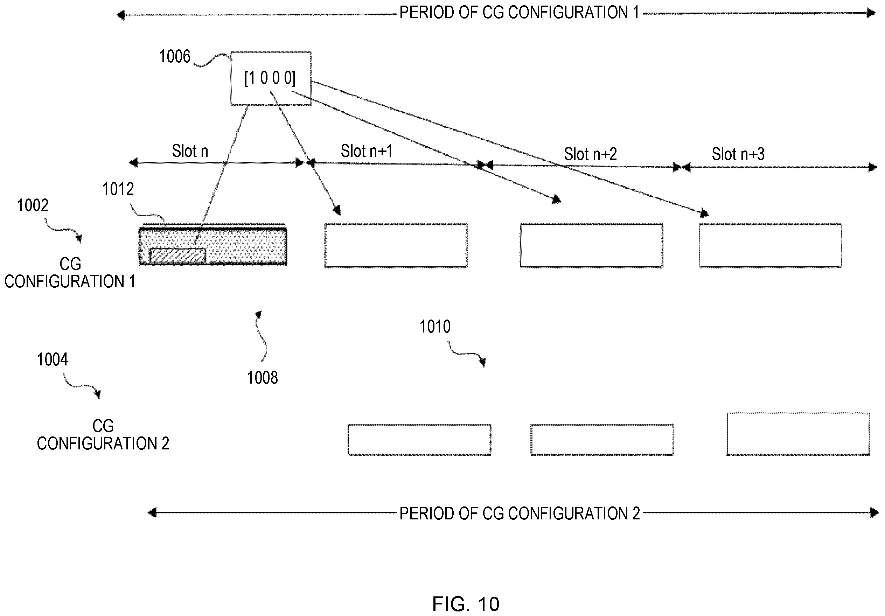

FIG. 10 illustrates two CG configurations (e.g., first CG configuration 1002, such as a NUL CG configuration, and second CG configuration 1004, such as a NUL CG configuration) utilizing a single UTO indication 1006 for both CG configurations. In this example, a first CG configuration 1002 includes four TOs 1008 in the CG period. The second CG configuration 1004 includes three TOs 1010 in the CG period. As shown, the periods and TOs of the first CG configuration 1002 and the second CG configuration 1004 overlap each other.

In the illustrated example, there is a restriction/dependence between UTO signaling (e.g., UTO indication 1006 carried over PUSCHs for different CG configurations at the same L1 priority or different L1 priorities. In this example, the UTO signaling (e.g., UTO indication 1006) reflects the buffer status or traffic arrival associated for more than one CG configurations. In this case, the UTO signaling indicates either the referred slots are unused, or the OFDM symbols covered by the CG PUSCH as unused. If two CG PUSCHs with two CG configurations overlap over an OFDM symbol, then if the TO associated with either CG configuration's PUSCH is indicated as unused, then each OFDM symbol within the TO may be deemed "unused" from the UE's point of view. In another word, the UTO signaling is used to indicate unused OFDM symbol(s), and any CG PUSCH containing such an OFDM symbol will not be generated by the UE. RRC signaling or other higher layer signaling may be utilized to establish the restriction/dependence between/among CG configurations and/or CG configurations' UTO-UCI signaling.

In the illustrated example, once the UTO signaling (UTO indication 1006) in the CG PUSCH 1012 associated with the first CG configuration 1002 in slot n indicates the next three occasions are unused, then CG PUSCHs with second CG configuration 904 are inhibited from generation. For instance, as shown, the UTO indication 1006 includes a bitmap that signals that TOs in slots n+1, n+2 and n+3 are unused by both first CG configuration 1002 and second CG configuration 1004. In this example, the bitmap indicates the use or non-use of the overlapping CG PUSCHs in both the CG configurations. In other words when the bitmap indicates an unused TO, the access node may assume that there will be no transmission in the slot for either CG configuration.

For the illustrated example, there may be a restriction on UTO signaling generation across CG configurations. In the illustrated example, the UTO signaling generated by a UE for a CG configuration shall not conflict with any UTO signaling generated by the UE for the same CG configuration or a different CG configuration. In other words, consistency may be maintained for UTO signaling for other CG configurations.

In some examples, CG PUSCH generation for a TO at a CG configuration can be inhibited by the UTO signaling indicated to the access node for the same CG configuration or for another CG configuration. For example, if an earlier signaling indicates that a slot a symbol is unused, the UE may not generate a CG PUSCH for either the first CG configuration 1002 or the second CG configuration 1004.

In some examples, the UTO signaling may have an effect on UCI multiplexing. UCI multiplexing pertinent to CG PUSCH transmission may include the selection of PUSCH for UCI multiplexing for SPS HARQ-ACK codebook multiplexing or DG HARQ-ACK codebook multiplexing. All the inhibited CG PUSCHs may be removed as candidates for UCI multiplexing. Inhibited CG PUSCHs refer to those that the UTO bitmap indicates as unused or other CG PUSCHs the transmissions of which fully or partially overlap TO(s) indicated as "unused".

In some examples, the UTO signaling may have an effect on an access node's blind detection behavior. The UTO signaling for a CG Configuration may help reduce blind detection at the access node for CG PUSCHs with that CG configuration. For potential transmissions of CG PUSCHs with another CG configuration, if they would overlap with one OFDM symbol in a TO indicated as "unused" by any UTO signaling, then blind detection can be safely skipped.

There may be variations of the examples shown in FIG. 9 and FIG. 10. For instance, in some examples, the CG configurations can be divided into groups. Within a group, there may be a restriction/dependence between UTO signaling as described with reference to FIG. 10; across groups, there is no restriction/dependence between UTO signaling carried over PUSCHs for different CG configurations at the same L1 priority or different L1 priorities as described with reference to FIG. 9. In some examples, within a group, there is no restriction/dependence between UTO signaling carried over PUSCHs for different CG configurations at the same L1 priority or different L1 priorities as described with reference to FIG. 9; across groups, there may be a restriction/dependence between UTO signaling as described with reference to FIG. 10.

In some examples, grouping may be according to Radio Resource Control (RRC) signaling (e.g., by including a group index for each CG configuration). The grouping criterion may include L1 priority. In some examples, grouping may be according to L1 priority. For example, group 1 consists of CG configurations of low physical layer priority, and group 2 consists of CG configurations of high physical layer priority. In some examples, L1 priority may be one but not the only factor in grouping. For example, there can be 3 groups, and there may be one group at high physical layer priority, two at low physical layer priority. In some examples, grouping may be according to Radio Resource Control (RRC) signaling (e.g., by including a group index for a CG configuration) where the CG configuration is configured with UTO-UCI. In some examples, grouping may be according to Radio Resource Control (RRC) signaling (e.g., by including a group index for a CG configuration) where the CG configuration may or may not be configured with UTO-UCI, then a CG configuration without being configured with UTO-UCI can still benefit from the UTO-UCI feature. In some examples, there a single group by specification or by configuration, a flag can be used in lieu of group index. In some examples, if a CG configuration is neither configured with UTO-UCI, nor provided a group index/flag, CG PUSCH generation associated with the CG configuration follow the legacy design as if no UTO-UCI is transmitted by the UE. In some examples, grouping is based on logical channel or logical channel group, CG configurations eligible for the same logical channel are grouped together implicitly. In some examples, RRC configuration signaling is used to group CG configurations, and for that L1 priority, logical channel, logical channel group may or may not be a factor for the use of such RRC configuration signaling.

In accordance with another aspect of the present disclosure, an overlap test (or collision test) is provided for determining overlap and handling collisions among NUL and SUL transmissions. In some examples, the collision test is at OFDM symbol level. For instance, an OFDM symbol of a transmission occasion in a first CG configuration (e.g., a NUL CG configuration) can be compared with a corresponding OFDM symbol in a second CG configuration (e.g., a SUL CG configuration) to determine whether the OFDM symbol is used or unused across both CG configurations. This determination can then inform UTO-UCI signaling.

However, because SUL and NUL can be at different subcarrier spacings and can use different cyclic prefixes (e.g., a normal cyclic prefix or an extended cyclic prefix), the determination of a collision/overlap test at the OFDM level may be difficult to implement at a UE. Thus, in some examples, the footprint for the collision test can be extended to a superset containing the CG PUSCH transmission occasion. In some examples, the superset can be a slot containing the PUSCH at the given SUL and/or NUL carriers. In some examples, the superset can be the union of OFDM symbol sets (e.g., each OFDM symbol set consists of a 2 symbol mini-slot, or 7 symbol mini-slot). To increase efficiency, the smallest union of OFDM symbol sets are identified. In some examples, the superset can be a slot at the smallest subcarrier spacing among the NUL and SUL carriers. In some examples, such a footprint extension/superset can be applied to only the NUL CG PUSCH transmissions or the SUL CG PUSCH transmissions. In some examples, the footprint extension/superset and/or the applicability of the footprint extension/superset to the NUL CG and/or SUL CG can be configured by the network, included in the specification design (e.g., the 3GPP specifications), and/or determined according to UE capabilities.

If PUSCH repetition with multiple PUSCHs in a CG configuration is supported, PUSCH repetition is transmitted and accounted for over valid PUSCH occasions only. In this case, it is unnecessary to provide UTO-UCI signaling for each TO, rather a single bit in a bitmap can be mapped to a bundle of TOs (e.g., R TOs) of valid PUSCH occasions, where R is the number of repetition.

In general, within the same CG configuration configured with UTO-UCI multiplexing and UTO-UCI signaling (or UTO signaling), the information provided by UTO-UCIs should be consistent from transmissions at multiple occasions. When there are multiple CG configuration configured on the same cell, whether there is any dependence between UTO-UCI signaling on them needs to be decided.

If UTO-UCI signaling is independent for different CG-configurations, while UE implementation flexibility is achieved, the resource sharing among different UEs may not be ideal. Over a slot (e.g., slot n) containing a TO (TO-1), the UE may indicate it as "unused" by a UTO-UCI (UTO-UCI-1) for one CG configuration (CG-1), but there can be a later UTO-UCI (UTO-UCI-2) for another CG configuration (CG-2) indicates another TO (TO-2) as "not used", and TO-2 is also contained in in slot n. This is then similar to the case where a TO is indicated as "unused" by a UTO-UCI for a CG configuration on a cell, a later UTO-UCI for the same CG configuration is allowed to revert the TO to "not unused".

To be consistent with the design for the same configuration configured with UTO-UCI signaling, it is proposed that on the same cell, when physical layer priority and logical channel based prioritization are not configured by network and/or are not supported by UE, between of a pair of CG configurations configured with UTO-UCI signaling, a second UTO-UCI (UTO-UCI-2) which is transmitted later in time than a first UTO-UCI (UTO-UCI-1) shall not indicate a TO (TO-2) as "not unused", if TO-2 overlaps with all or any of OFDM symbol(s) contained in a TO (TO-1) which is indicated as "unused" by the first UTO-UCI (UTO-UCI-1), the first UTO-UCI and the second UTO-UCI may be associated with different CG configurations, UE MAC does not generate MAC PDU for PUSCH of TO-2. When UTO-UCI-1 and UTO-UCI-2 are associated with different CG configurations, UTO-UCI-1 is the latest UTO-UCI with the associated CG configuration prior to UTO-UCI-1. It is also proposed on the same cell, a second UTO-UCI (UTO-UCI-2) which is transmitted later in time than a first UTO-UCI (UTO-UCI-1) can indicate a TO (TO-2) as "unused", even if TO-2 overlaps with all or any OFDM symbols contained in a TO (TO-1) which is indicated as "not unused" by the first UTO-UCI (UTO-UCI-1), the first UTO-UCI and the second UTO-UCI may be associated with different CG configurations.

If there are at least two configured CG configurations on the same cell, the first CG configuration (CG-3) is configured with UTO-UCI signaling, the second CG configuration (CG-4) is not configured with UTO-UCI signaling, in one example, the second CG configuration's PUSCH transmission(s) do not honor any UTO-UCI signaling with the first CG configuration. In another example, if a PUSCH transmission with the second CG configuration (CG-4) would overlap with all or any of OFDM symbol(s) contained in a TO which is indicated as "unused" by the a UTO-UCI associated with the first CG configuration (CG-3), then that PUSCH cannot be transmitted (e.g., MAC does not generate MAC PDU for that PUSCH). In some examples, UTO-UCI signaling generation for CG-3 considers PUSCH transmission(s) with CG-4: if one or more OFDM symbols of a PUSCH transmission with CG-3 would overlap with a PUSCH transmission with CG-4 UE MAC has generated a MAC PDU for, that TO is marked as "not unused". In some examples, UTO-UCI signaling generation for CG-3 does not consider PUSCH transmission(s) with CG-4.

When physical layer priority for PUSCH is supported by UE and is configured by network, there can be two approaches to handle the situation where physical layer priority and UTO signaling are simultaneously configured: the UTO-UCI signaling generation and its use is limited to CG configurations of the same physical layer priority, and the above design options for the situation without physical layer priority are applicable to handling CG configurations within the same physical layer priority. Cross physical layer priorities, a high priority channel can override or cancel a low priority channel as in legacy design. However, other options can be also considered, as described herein.

Regarding physical layer priority, if there are at least two configured CG configurations on the same cell, at least one of them is configured a physical layer priority, the configured CG configuration which is not configured with a physical layer priority (if any) is assumed to be at low physical layer priority. In some examples, if a CG configuration (e.g., CG-5) is of a lower physical layer priority and is configured with UTO-UCI signaling, and a CG configuration (e.g., CG-6) is of a high physical layer priority, the UTO-UCI signaling with CG-5 is not considered in the generation of PUSCH for CG-6 (e.g., MAC generates MAC PDU for CG-6 without considering UTO-UCI signaling with CG-5). The UTO-UCI signaling for CG-5 does not consider PUSCH transmission(s) with CG-6. In some examples, the UTO-UCI signaling with CG-5 considers PUSCH transmission(s) with CG-6, if one or more OFDM symbols of a PUSCH transmission with CG-5 would overlap with a PUSCH transmission with CG-6 UE MAC has generated a MAC PDU for, that TO is marked as "not unused".

Regarding physical layer priority, if there are at least two configured CG configurations on the same cell, at least one of them is configured a physical layer priority, the configured CG configuration which is not configured with a physical layer priority (if any) is assumed to be at low physical layer priority. In one behavior, if a CG configuration (CG-7) is of a lower physical layer priority and is NOT configured with UTO-UCI signaling, and a CG configuration (CG-8) is of a high physical layer priority and is configured with UTO-UCI signaling, the UTO-UCI signaling with CG-8 is not considered in the generation of PUSCH for CG-7 (MAC generates MAC PDU for CG-7 without considering UTO-UCI signaling with CG-8). In some examples, the latest UTO-UCI signaling with CG-8 is considered in the generation of PUSCH for CG-7: if a PUSCH transmission (PUSCH-7) with CG-7 would overlap with any OFDM symbol in a TO which is indicated as "not unused" by the latest UTO-UCI with CG-8 prior to PUSCH-7, then PUSCH-7 is not transmitted (UE MAC does not generate MAC PDU for PUSCH-7).

Regarding physical layer priority, if there are at least two configured CG configurations on the same cell, at least one of them is configured a physical layer priority, the configured CG configuration which is not configured with a physical layer priority (if any) is assumed to be at low physical layer priority. Assume a CG configuration (e.g., CG-9) is of a lower physical layer priority and is configured with UTO-UCI signaling, and a CG configuration (e.g., CG-10) is of a high physical layer priority and is configured with UTO-UCI signaling. In some examples, the UTO-UCI signaling is decoupled with physical layer priorities, the UTO-UCI signaling with CG-10 is not considered in the generation of PUSCH for CG-9 (MAC generates MAC PDU for CG-9 without considering UTO-UCI signaling with CG-10). In some examples, the latest UTO-UCI signaling with CG-10 is considered in the generation of PUSCH for CG-9: if a PUSCH transmission (PUSCH-9) with CG-9 would overlap with any OFDM symbol in a TO which is indicated as "not unused" by the latest UTO-UCI with CG-10 prior to PUSCH-9, then PUSCH-9 is not transmitted (UE MAC does not generate MAC PDU for PUSCH-9).

In accordance with an aspect of the present disclosure, a HARQ process ID determination design (e.g., "new HARQ process ID determination") can include the following. For determination of HARQ process IDs associated to PUSCHs in multi-PUSCHs CG assuming one TB per PUSCH:
1) The HARQ process ID for the first configured PUSCH in a period is determined based on the legacy CG procedure when cg-RetransmissionTimer is not configured, and applying the following formula, whichever is applicable HARQ Process ID = [X*floor((CURRENT_symbol ) / periodicity)] modulnrofHARQ-Processes HARQ Process ID = [X*floor((CURRENT_symbol ) / periodicity)] modulnrofHARQ-Processes + harq-ProcID-Offset2 1.2 X= the number of configured PUSCHs in the CG period
2) The HARQ process ID of the remaining configured and valid CG PUSCHs in the period is determined by incrementing the HARQ process ID of the preceding PUSCH in the period by one with module operation with nrofHARQ-Processes or module operation with (nrofHARQProcesses + harq-ProcID-Offset2), whichever applicable.
3) Note: A configured CG PUSCH is invalid if the CG PUSCH is dropped due to collision with DL symbol(s) indicated by tdd-UL-DLConfigurationCommon or tdd-UL-DL-ConfigurationDedicated or SSB.

In some examples, a basic UE feature group can be defined as the support of multiple CG PUSCHs with new HARQ process ID determination in a single CG period of a CG configuration. In some examples, a prerequisite for this XR CG enhancement feature group can be Type-1 CG or Type-2 CG as defined by either {5-19} or {5-20} as in 3GPP TR 38.822 v.17.1.0, the entire content of which is incorporated herein by reference. The type of this feature group may be per band.

In some examples, a basic UE feature group is defined as the support of multiple CG PUSCHs with new HARQ process ID determination in a single CG period of a CG configuration. In some examples, a prerequisite for this XR CG enhancement feature group can be either {5-19} or {5-20} as in 3GPP TR 38.822 v.17.1.0. In some examples, CG uplink skipping in{3-6} or {24-16} is also a prerequisite. In some examples, PUSCH repetition or Ich-BasedPrioritization cannot be configured together with this UE feature group, to be consistent with the restriction imposed on 3GPP Release-16 uplink skipping design. The type of this feature group may be per band. The multiple CG PUSCHs may be associated with more than one transport block.

In some examples, a UE feature group supports multiple CG PUSCHs in multiple CG periods and UTO-UCI multiplexing and UTO signaling. In some examples, a prerequisite for this XR CG enhancement feature group can be either {5-19} or {5-20} as in 3GPP TR 38.822 v.17.1.0. Alternatively, in some examples, the basic UE feature group prerequisite can be used. The multiple CG PUSCHs may be associated with more than one transport block.

In some examples, a UE feature group supports multiple CG PUSCHs in multiple CG periods with legacy HARQ process ID determination which is equivalent to X=1 with new HARQ process ID determination, and UTO-UCI multiplexing and UTO signaling. In some examples, a prerequisite for this XR CG enhancement feature group can be either {5-19} or {5-20} as in 3GPP TR 38.822 v.17.1.0. Alternatively, in some examples, the basic UE feature group prerequisite can be used. In some examples, CG uplink skipping in{3-6} or {24-16} can also be a prerequisite. In some examples, PUSCH repetition or Ich-BasedPrioritization cannot be configured together with this UE feature group, to be consistent with the restriction imposed on Release-16 uplink skipping design. The multiple CG PUSCHs may be associated with more than one transport block. The type of this feature group may be per band.

In some examples, a UE feature group supports multiple CG PUSCHs in multiple CG periods with new HARQ process ID determination and UTO-UCI multiplexing and UTO signaling. In some examples, a prerequisite for this XR CG enhancement feature group can be either {5-19} or {5-20} as in TR 38.822 v.17.1.0. Alternatively, in some examples, the basic UE feature group prerequisite can be used. In some examples, CG uplink skipping in{3-6} or {24-16} can also be used as a prerequisite. In some examples, PUSCH repetition or Ich-BasedPrioritization cannot be configured together with this UE feature group, to be consistent with the restriction imposed on 3GPP Release-16 uplink skipping design. The multiple CG PUSCHs may be associated with more than one transport block. The type of this feature group may be per band.

In some examples, a UE feature group supports multiple CG PUSCHs with new HARQ process ID determination in a CG period and UTO-UCI multiplexing and UTO signaling. In some examples, a prerequisite for this XR CG enhancement feature group can be either {5-19} or {5-20} as in TR 38.822 v.17.1.0. Alternatively, in some examples, the basic UE feature group prerequisite can be used. The multiple CG PUSCHs may be associated with more than one transport block.

In some examples, a UE feature group supports multiple CG PUSCHs with new HARQ process ID determination in a CG period and UTO-UCI multiplexing and UTO signaling. In some examples, a prerequisite for this XR CG enhancement feature group can be either {5-19} or {5-20} as in TR 38.822 v.17.1.0. Alternatively, in some examples, the basic UE feature group prerequisite can be used. In some examples, CG uplink skipping in{3-6} or {24-16} can also be a prerequisite. In some examples, PUSCH repetition or Ich-BasedPrioritization cannot be configured together with this UE feature group, to be consistent with the restriction imposed on 3GPP Release-16 uplink skipping design. The multiple CG PUSCHs may be associated with more than one transport block. The type of this feature group may be per band.

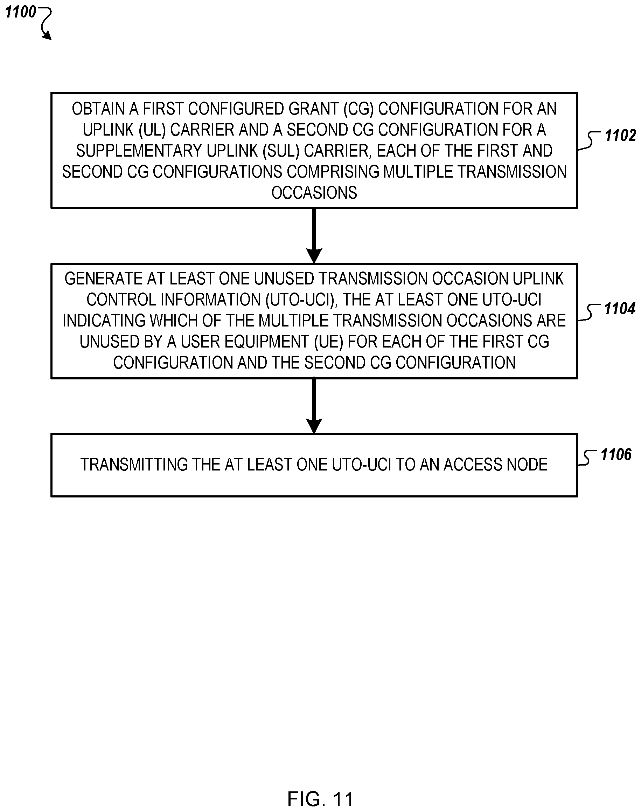

FIG. 11 illustrates a flowchart of an example method 1100, according to some implementations. For clarity of presentation, the description that follows generally describes method 1100 in the context of the other figures in this description. For example, method 1100 can be performed by UE 102 of FIG. 1. It will be understood that method 1100 can be performed, for example, by any suitable system, environment, software, hardware, or a combination of systems, environments, software, and hardware, as appropriate. In some implementations, various steps of method 1100 can be run in parallel, in combination, in loops, or in any order.

Operations of the method 1100 include obtaining 1102 a first CG configuration for an UL carrier (e.g., a normal uplink carrier, NUL) and a second CG configuration for a SUL carrier, each of the first and second CG configurations including multiple transmission occasions. At 1104, at least one UTO-UCI is generated, the at least one UTO-UCI which of the multiple transmission occasions are unused by a UE for each of the first CG configuration and the second CG configuration. The at least one UTO-UCI is transmitted 1106 to the access node (e.g., using a CG PUSCH transmission) to indicate to the access node which of the multiple transmission occasions are unused by the UE for each of the first CG configuration and the second CG configuration.

In some examples, the at least one UTO-UCI includes a first UTO-UCI indicating one or more unused transmission occasions for the first CG configuration, and a second UTO-UCI indicating one or more unused transmission occasions for the second CG configuration, in which the second UTO-UCI is independent of the first UTO-UCI. In some examples, the method 1100 includes: generating a first UTO-UCI for the first CG configuration, transmitting, to the access node, the first UTO-UCI using a first CG PUSCH transmission in the first CG configuration to indicate to the access node which of the transmission occasions are unused by the UE for the first CG configuration, generating a second UTO-UCI for the second CG configuration, in which the second UTO-UCI is independent of the first UTO-UCI of the first CG configuration, and transmitting, to the access node, the second UTO-UCI using a second CG PUSCH transmission in the second CG configuration to indicate to the access node which of the transmission occasions are unused by the UE for the second CG configuration.

In some examples, the at least one UTO-UCI includes a first UTO-UCI indicating one or more unused transmission occasions for one of the first CG configuration or the second CG configuration, and the first UTO-UCI restricts which of the transmission occasions the other of the first CG configuration or the second CG configuration can be used by the UE. In some examples, the method 1100 includes: determining that a first transmission occasion for one of the first CG configuration or the second CG configuration is unused by the UE, identifying a second transmission occasion for the other of the first CG configuration or the second CG configuration that overlaps with the first transmission occasion, determining that the second transmission occasion for the other of the first CG configuration or the second CG configuration is unused by the UE, and generating the at least one UTO-UCI based in part on the determination that the first and second transmission occasions are unused by the UE.

In some examples, the first CG configuration at least partially overlaps the second CG configuration. In some examples, an overlap between the first CG configuration and the second CG configuration is determined at an orthogonal frequency division multiplexing (OFDM) symbol level. In some examples, an overlap between the first CG configuration and the second CG configuration is determined based on a superset that contains a transmission occasion of at least one of the first CG configuration or the second CG configuration. In some examples, an overlap between the first CG configuration and the second CG configuration is determined at a slot level of the UL carrier or a slot level of the SUL carrier. In some examples, an overlap between the first CG configuration and the second CG configuration is determined at a slot level of the UL carrier or SUL carrier associated with a smallest subcarrier spacing. In some examples, an overlap between the first CG configuration and the second CG configuration is determined based on a union of OFDM symbols sets. In some examples, an overlap between the first CG configuration and the second CG configuration is determined based on a superset that contains a transmission occasion of one of the first CG configuration or the second CG configuration, and the superset is applied to only one of the first CG configuration or the second CG configuration. In some examples, an overlap between the first CG configuration and the second CG configuration is determined based on at least one of network configuration, specification design, or capabilities of the UE.

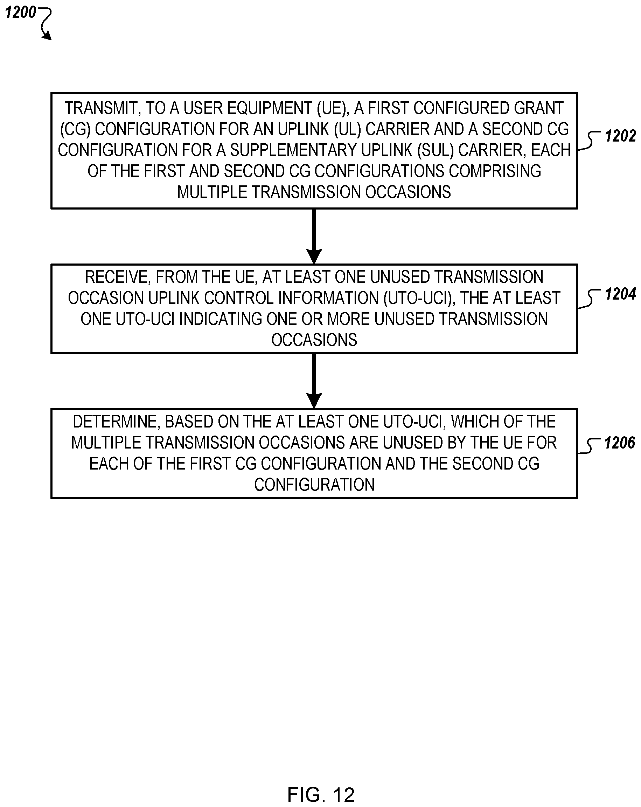

FIG. 12 illustrates a flowchart of an example method 1200, according to some implementations. For clarity of presentation, the description that follows generally describes method 1200 in the context of the other figures in this description. For example, method 1200 can be performed by base station 104 of FIG. 1. It will be understood that method 1200 can be performed, for example, by any suitable system, environment, software, hardware, or a combination of systems, environments, software, and hardware, as appropriate. In some implementations, various steps of method 1200 can be run in parallel, in combination, in loops, or in any order.

Operations of the process 1200 include transmitting 1202, to a UE, a first CG configuration for an UL carrier (e.g., NUL carrier) and a second CG configuration for a SUL carrier, each of the first and second CG configurations comprising multiple transmission occasions. At 1204, at least one UTO-UCI is received from the UE, the at least one UTO-UCI indicating one or more unused transmission occasions. Based on the at least one UTO-UCI, it is determined which of the multiple transmission occasions are unused by the UE for each of the first CG configuration and the second CG configuration.

In some examples, the at least one UTO-UCI includes a first UTO-UCI indicating one or more unused transmission occasions for the first CG configuration, and a second UTO-UCI indicating one or more unused transmission occasions for the second CG configuration, the second UTO-UCI being independent of the first UTO-UCI. In some examples, the method 1200 includes: receiving, from the UE, a first CG PUSCH transmission in the first CG configuration, the first CG PUSCH transmission including a first UTO-UCI for the first CG configuration, determining, based on the first UTO-UCI, which of the transmission occasions are unused by the UE for the first CG configuration, receiving, from the UE, a second CG PUSCH transmission in the second CG configuration, the second CG PUSCH transmissions including a second UTO-UCI that is independent of the first UTO-UCI, and determining, based on the second UTO-UCI, which of the transmission occasions are unused by the UE for the second CG configuration.

In some examples, the at least one UTO-UCI includes a first UTO-UCI indicating one or more unused transmission occasions for one of the first CG configuration or the second CG configuration, and the first UTO-UCI restricts which of the transmission occasions the other of the first CG configuration or the second CG configuration can be used by the UE.

In some examples, the first CG configuration at least partially overlaps the second CG configuration. In some examples, an overlap between the first CG configuration and the second CG configuration is determined at an OFDM symbol level. In some examples, an overlap between the first CG configuration and the second CG configuration is determined based on a superset that contains a transmission occasion of at least one of the first CG configuration or the second CG configuration. In some examples, an overlap between the first CG configuration and the second CG configuration is determined at a slot level of the UL carrier or a slot level of the SUL carrier. In some examples, an overlap between the first CG configuration and the second CG configuration is determined at a slot level of the UL carrier or SUL carrier associated with a smallest subcarrier spacing. In some examples, an overlap between the first CG configuration and the second CG configuration is determined based on a union of OFDM symbols sets. In some examples, an overlap between the first CG configuration and the second CG configuration is determined based on a superset that contains a transmission occasion of one of the first CG configuration or the second CG configuration, and the superset is applied to only one of the first CG configuration or the second CG configuration. In some examples, an overlap between the first CG configuration and the second CG configuration is determined based on at least one of a configuration signal transmitted to the UE by the access node, specification design, or capabilities of the UE.

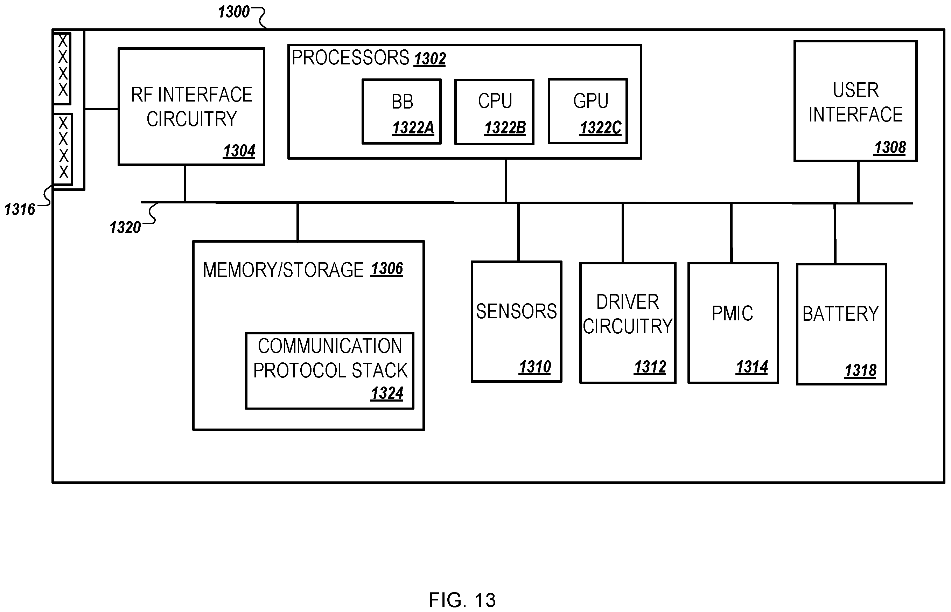

FIG. 13 illustrates an example UE 1300, according to some implementations. The UE 1300 may be similar to and substantially interchangeable with UE 102 of FIG. 1.

The UE 1300 may be any mobile or non-mobile computing device, such as, for example, mobile phones, computers, tablets, wearable devices (for example, a smart watch), relaxed-IoT devices.

The UE 1300 may include processor 1302, RF interface circuitry 1304, memory/storage 1306, user interface 1308, sensors 1310, driver circuitry 1312, power management integrated circuit (PMIC) 1314, one or more antenna(s) 1316, and battery 1318. The components of the UE 1300 may be implemented as integrated circuits (ICs), portions thereof, discrete electronic devices, or other modules, logic, hardware, software, firmware, or a combination thereof. The block diagram of FIG. 13 is intended to show a high-level view of some of the components of the UE 1300. However, some of the components shown may be omitted, additional components may be present, and different arrangement of the components shown may occur in other implementations.

The components of the UE 1300 may be coupled with various other components over one or more interconnects 1320, which may represent any type of interface, input/output, bus (local, system, or expansion), transmission line, trace, optical connection, etc. that allows various circuit components (on common or different chips or chipsets) to interact with one another.

The processor 1302 may include one or more processors. For example, the processor 1302 may include processor circuitry such as, for example, baseband processor circuitry (BB) 1322A, central processor unit circuitry (CPU) 1322B, and graphics processor unit circuitry (GPU) 1322C. The processor 1302 may include any type of circuitry or processor circuitry that executes or otherwise operates computer-executable instructions, such as program code, software modules, or functional processes from memory/storage 1306 to cause the UE 1300 to perform operations as described herein.

In some implementations, the baseband processor circuitry 1322A may access a communication protocol stack 1324 in the memory/storage 1306 to communicate over a 3GPP compatible network. In general, the baseband processor circuitry 1322A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 1304. The baseband processor circuitry 1322A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 1306 may include one or more non-transitory, computer-readable media that includes instructions (for example, communication protocol stack 1324) that may be executed by the processor 1302 to cause the UE 1300 to perform various operations described herein. The memory/storage 1306 include any type of volatile or non-volatile memory that may be distributed throughout the UE 1300. In some implementations, some of the memory/storage 1306 may be located on the processor 1302 itself (for example, L1 and L2 cache), while other memory/storage 1306 is external to the processor 1302 but accessible thereto via a memory interface. The memory/storage 1306 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1304 may include transceiver circuitry and radio frequency front module (RFEM) that allows the UE 1300 to communicate with other devices over a radio access network. The RF interface circuitry 1304 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 1316 and proceed to filter and amplify (with a low-noise amplifier) the signal. The signal may be provided to a receiver of the transceiver that downconverts the RF signal into a baseband signal that is provided to the baseband processor.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 1316. In various implementations, the RF interface circuitry 1304 may be configured to transmit/receive signals in a manner compatible with NR access technologies.

The antenna(s) 1316 may include one or more antenna elements to convert electrical signals into radio waves to travel through the air and to convert received radio waves into electrical signals. The antenna elements may be arranged into one or more antenna panels. The antenna(s) 1316 may have antenna panels that are omnidirectional, directional, or a combination thereof to enable beamforming and multiple input, multiple output communications. The antenna(s) 1316 may include microstrip antennas, printed antennas fabricated on the surface of one or more printed circuit boards, patch antennas, phased array antennas, etc. The antenna(s) 1316 may have one or more panels designed for specific frequency bands including bands in FR1 or FR2.

The user interface 1308 includes various input/output (I/O) devices designed to enable user interaction with the UE 1300. The user interface 1308 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 1300.

The sensors 1310 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1312 may include software and hardware elements that operate to control particular devices that are embedded in the UE 1300, attached to the UE 1300, or otherwise communicatively coupled with the UE 1300. The driver circuitry 1312 may include individual drivers allowing other components to interact with or control various input/output (I/O) devices that may be present within, or connected to, the UE 1300. For example, driver circuitry 1312 may include a display driver to control and allow access to a display device, a touchscreen driver to control and allow access to a touchscreen interface, sensor drivers to obtain sensor readings of sensors 1310 and control and allow access to sensors 1310, drivers to obtain actuator positions of electro-mechanic components or control and allow access to the electro-mechanic components, a camera driver to control and allow access to an embedded image capture device, audio drivers to control and allow access to one or more audio devices.

The PMIC 1314 may manage power provided to various components of the UE 1300. In particular, with respect to the processor 1302, the PMIC 1314 may control power-source selection, voltage scaling, battery charging, or DC-to-DC conversion.

In some implementations, the PMIC 1314 may control, or otherwise be part of, various power saving mechanisms of the UE 1300. A battery 1318 may power the UE 1300, although in some examples the UE 1300 may be mounted deployed in a fixed location, and may have a power supply coupled to an electrical grid. The battery 1318 may be a lithium ion battery, a metal-air battery, such as a zinc-air battery, an aluminum-air battery, a lithium-air battery, and the like. In some implementations, such as in vehicle-based applications, the battery 1318 may be a typical lead-acid automotive battery.

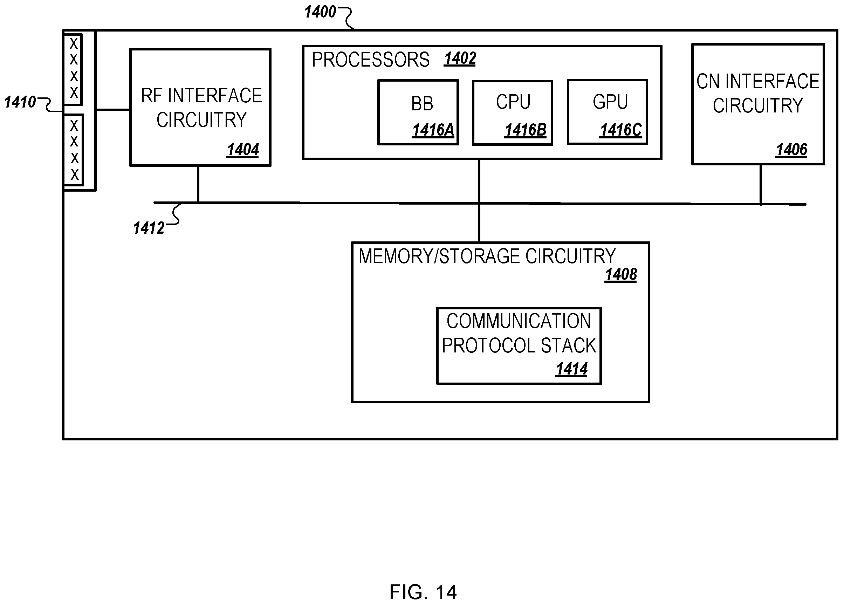

FIG. 14 illustrates an example access node 1400 (e.g., a base station or gNB), according to some implementations. The access node 1400 may be similar to and substantially interchangeable with base station 104. The access node 1400 may include processor 1402, RF interface circuitry 1404, core network (CN) interface circuitry 1406, memory/storage circuitry 1408, and one or more antenna(s) 1410. The processor 1402 may include any type of circuitry or processor circuitry that executes or otherwise operates computer-executable instructions, such as program code, software modules, or functional processes from memory/storage circuitry 1408 to cause the access node 1400 to perform operations as described herein

The components of the access node 1400 may be coupled with various other components over one or more interconnects 1412. The processors 1402, RF interface circuitry 1404, memory/storage circuitry 1408 (including communication protocol stack 1414), antenna(s) 1410, and interconnects 1412 may be similar to like-named elements shown and described with respect to FIG. 13. For example, the processor 1402 may include processor circuitry such as, for example, baseband processor circuitry (BB) 1416A, central processor unit circuitry (CPU) 1416B, and graphics processor unit circuitry (GPU) 1416C.

The CN interface circuitry 1406 may provide connectivity to a core network, for example, a 5th Generation Core network (5GC) using a 5GC-compatible network interface protocol such as carrier Ethernet protocols, or some other suitable protocol. Network connectivity may be provided to/from the access node 1400 via a fiber optic or wireless backhaul. The CN interface circuitry 1406 may include one or more dedicated processors or FPGAs to communicate using one or more of the aforementioned protocols. In some implementations, the CN interface circuitry 1406 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 1400 that operates in an NR or 5G system (for example, a gNB), and the term "E-UTRAN node" or the like may refer to an access node 1400 that operates in an LTE or 4G system (e.g., an eNB). According to various implementations, the access node 1400 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 1400 may be implemented as one or more software entities running on server computers as part of a virtual network, which may be referred to as a CRAN and/or a virtual baseband unit pool (vBBUP). In V2X scenarios, the access node 1400 may be or act as a "Road Side Unit." The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes one or more processors configured to, when executing instructions stored in a memory, perform operations including: obtaining a first CG configuration for an UL carrier and a second CG configuration for a SUL carrier, each of the first and second CG configurations comprising multiple transmission occasions, generating at least one UTO-UCI, the at least one UTO-UCI indicating which of the multiple transmission occasions are unused by a UE for each of the first CG configuration and the second CG configuration, and instructing RF circuitry to transmit the at least one UTO-UCI to an access node.

Example 2 is the one or more processors of Example 1 in which the at least one UTO-UCI includes a first UTO-UCI indicating one or more unused transmission occasions for the first CG configuration, and a second UTO-UCI indicating one or more unused transmission occasions for the second CG configuration, the second UTO-UCI being independent of the first UTO-UCI.

Example 3 is the one or more processors of Examples 1 or 2, the operations further including: generating a first UTO-UCI for the first CG configuration; instructing RF circuitry to transmit, to the access node, the first UTO-UCI using a first CG PUSCH transmission in the first CG configuration to indicate to the access node which of the transmission occasions are unused by the UE for the first CG configuration; generating a second UTO-UCI for the second CG configuration, in which the second UTO-UCI is independent of the first UTO-UCI of the first CG configuration; and instructing RF circuitry to transmit, to the access node, the second UTO-UCI using a second CG PUSCH transmission in the second CG configuration to indicate to the access node which of the transmission occasions are unused by the UE for the second CG configuration.

Example 4 is the one or more processors of any of Examples 1 to 3 in which the at least one UTO-UCI includes a first UTO-UCI indicating one or more unused transmission occasions for one of the first CG configuration or the second CG configuration, and the first UTO-UCI restricts which of the transmission occasions the other of the first CG configuration or the second CG configuration can be used by the UE.

Example 5 is the one or more processors of any of Examples 1 to 4, the operations further including: determining that a first transmission occasion for one of the first CG configuration or the second CG configuration is unused by the UE; identifying a second transmission occasion for the other of the first CG configuration or the second CG configuration that overlaps with the first transmission occasion; determining that the second transmission occasion for the other of the first CG configuration or the second CG configuration is unused by the UE; and generating the at least one UTO-UCI based in part on the determination that the first and second transmission occasions are unused by the UE.

Example 6 is the one or more processors of any of Examples 1 to 5 in which the first CG configuration at least partially overlaps the second CG configuration.

Example 7 is the one or more processors of any of Examples 1 to 6 in which an overlap between the first CG configuration and the second CG configuration is determined at an orthogonal frequency division multiplexing (OFDM) symbol level.

Example 8 is the one or more processors of any of Examples 1 to 7 in which an overlap between the first CG configuration and the second CG configuration is determined based on a superset that contains a transmission occasion of at least one of the first CG configuration or the second CG configuration.

Example 9 is the one or more processors of any of Examples 1 to 8 in which an overlap between the first CG configuration and the second CG configuration is determined at a slot level of the UL carrier or a slot level of the SUL carrier.

Example 10 is the one or more processors of any of Examples 1 to 9 in which an overlap between the first CG configuration and the second CG configuration is determined at a slot level of the UL carrier or SUL carrier associated with a smallest subcarrier spacing.

Example 11 is the one or more processors of any of Examples 1 to 10 in which an overlap between the first CG configuration and the second CG configuration is determined based on a union of OFDM symbols sets.

Example 12 is the one or more processors of any of Examples 1 to 11 in which an overlap between the first CG configuration and the second CG configuration is determined based on a superset that contains a transmission occasion of one of the first CG configuration or the second CG configuration, and the superset is applied to only one of the first CG configuration or the second CG configuration.

Example 13 is the one or more processors of any of Examples 1 to 12 in which an overlap between the first CG configuration and the second CG configuration is determined based on at least one of network configuration, specification design, or capabilities of the UE.

Example 14 includes one or more processors configured to, when executing instructions stored in a memory, perform operations including: instructing RF circuitry to transmit, to a UE, a first CG configuration for an UL carrier and a second CG configuration for a SUL carrier, each of the first and second CG configurations comprising multiple transmission occasions; receiving, from the UE, at least one UTO-UCI, the at least one UTO-UCI indicating one or more unused transmission occasions; and determining, based on the at least one UTO-UCI, which of the multiple transmission occasions are unused by the UE for each of the first CG configuration and the second CG configuration.

Example 15 is the one or more processors of Example 14 in which the at least one UTO-UCI includes a first UTO-UCI indicating one or more unused transmission occasions for the first CG configuration, and a second UTO-UCI indicating one or more unused transmission occasions for the second CG configuration, the second UTO-UCI being independent of the first UTO-UCI.

Example 16 is the one or more processors of Examples 14 or 15, the operations further including: receiving, from the UE, a first CG PUSCH transmission in the first CG configuration, the first CG PUSCH transmission including a first UTO-UCI for the first CG configuration; determining, based on the first UTO-UCI, which of the transmission occasions are unused by the UE for the first CG configuration; receiving, from the UE, a second CG PUSCH transmission in the second CG configuration, the second CG PUSCH transmissions including a second UTO-UCI that is independent of the first UTO-UCI; and determining, based on the second UTO-UCI, which of the transmission occasions are unused by the UE for the second CG configuration.

Example 17 is the one or more processors of any of Examples 14 to 16 in which the at least one UTO-UCI includes a first UTO-UCI indicating one or more unused transmission occasions for one of the first CG configuration or the second CG configuration, and the first UTO-UCI restricts which of the transmission occasions the other of the first CG configuration or the second CG configuration can be used by the UE.

Example 18 is the one or more processors of any of Examples 14 to 17 in which the first CG configuration at least partially overlaps the second CG configuration.

Example 19 is the one or more processors of any of Examples 14 to 18 in which an overlap between the first CG configuration and the second CG configuration is determined at an OFDM symbol level.

Example 20 is the one or more processors of any of Examples 14 to 19 in which an overlap between the first CG configuration and the second CG configuration is determined based on a superset that contains a transmission occasion of at least one of the first CG configuration or the second CG configuration.

Example 21 is the one or more processors of any of Examples 14 to 20 in which an overlap between the first CG configuration and the second CG configuration is determined at a slot level of the UL carrier or a slot level of the SUL carrier.

Example 22 is the one or more processors of any of Examples 14 to 21 in which an overlap between the first CG configuration and the second CG configuration is determined at a slot level of the UL carrier or SUL carrier associated with a smallest subcarrier spacing.

Example 23 is the one or more processors of any of Examples 14 to 22 in which an overlap between the first CG configuration and the second CG configuration is determined based on a union of OFDM symbols sets.

Example 24 is the one or more processors of any of Examples 14 to 23 in which an overlap between the first CG configuration and the second CG configuration is determined based on a superset that contains a transmission occasion of one of the first CG configuration or the second CG configuration, and the superset is applied to only one of the first CG configuration or the second CG configuration.

Example 25 is the one or more processors of any of Examples 14 to 24 in which an overlap between the first CG configuration and the second CG configuration is determined based on at least one of a configuration signal transmitted to the UE by the access node, specification design, or capabilities of the UE.

Example 26 includes one or more non-transitory computer-readable media including instructions to cause an electronic device, upon execution of the instructions by one or more processors of the electronic device, to perform one or more elements of the operations described in or related to any of Examples 1-25, or any other operation, method, or process described herein.

Example 27 includes an apparatus including logic, modules, or circuitry to perform one or more elements of the operations described in or related to any of Examples 1-25, or any other operation, method, or process described herein.

Example 28 includes a method, technique, or process as described in or related to any of Examples 1-25, or portions or parts thereof.

Example 29 includes an apparatus including the one or more processors as described in or related to any of Examples 1-25, or portions thereof.

Example 30 includes a method of communicating in a wireless network as shown and described herein.

Example 31 includes a system for providing wireless communication as shown and described herein. The operations or actions performed by the system can include the operations of any one of Examples 1-25.

Example 32 includes a device for providing wireless communication as shown and described herein. The operations or actions performed by the device can include the operations of any one of Examples 1-25.

The previously-described Examples 1-25 are implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

A system, e.g., a base station, an apparatus including one or more baseband processors, and so forth, can be configured to perform particular operations or actions by virtue of having software, firmware, hardware, or a combination of them installed on the system that in operation causes or cause the system to perform the actions.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. One or more processors configured to, when executing instructions stored in a memory, perform operations comprising:
obtaining a first configured grant (CG) configuration for an uplink (UL) carrier and a second CG configuration for a supplementary uplink (SUL) carrier, each of the first and second CG configurations comprising multiple transmission occasions;
generating at least one unused transmission occasion uplink control information (UTO-UCI), the at least one UTO-UCI indicating which of the multiple transmission occasions are unused by a user equipment (UE) for each of the first CG configuration and the second CG configuration; and
instructing radio frequency (RF) circuitry to transmit the at least one UTO-UCI to an access node.

2. The one or more processors of claim 1, wherein the at least one UTO-UCI comprises a first UTO-UCI indicating one or more unused transmission occasions for the first CG configuration, and a second UTO-UCI indicating one or more unused transmission occasions for the second CG configuration, wherein the second UTO-UCI is independent of the first UTO-UCI.

3. The one or more processors of claim 1 configured to perform operations further comprising:
generating a first UTO-UCI for the first CG configuration;
instructing the RF circuitry to transmit, to the access node, the first UTO-UCI using a first CG PUSCH transmission in the first CG configuration to indicate to the access node which of the transmission occasions are unused by the UE for the first CG configuration;
generating a second UTO-UCI for the second CG configuration, wherein the second UTO-UCI is independent of the first UTO-UCI of the first CG configuration; and
instructing the RF circuitry to transmit, to the access node, the second UTO-UCI using a second CG PUSCH transmission in the second CG configuration to indicate to the access node which of the transmission occasions are unused by the UE for the second CG configuration.

4. The one or more processors of claim 1, wherein the at least one UTO-UCI comprises a first UTO-UCI indicating one or more unused transmission occasions for one of the first CG configuration or the second CG configuration, and wherein the first UTO-UCI restricts which of the transmission occasions the other of the first CG configuration or the second CG configuration can be used by the UE.

5. The one or more processors of claim 1 configured to perform operations further comprising:
determining that a first transmission occasion for one of the first CG configuration or the second CG configuration is unused by the UE;
identifying a second transmission occasion for the other of the first CG configuration or the second CG configuration that overlaps with the first transmission occasion;
determining that the second transmission occasion for the other of the first CG configuration or the second CG configuration is unused by the UE; and
generating the at least one UTO-UCI based in part on the determination that the first and second transmission occasions are unused by the UE.

6. The one or more processors of claim 1, wherein the first CG configuration at least partially overlaps the second CG configuration, and wherein the overlap is determined:
at an orthogonal frequency division multiplexing (OFDM) symbol level;
at a slot level of the UL carrier or a slot level of the SUL carrier; or
based on a union of OFDM symbols sets.

7. The one or more processors of claim 1, wherein an overlap between the first CG configuration and the second CG configuration is determined based on a superset that contains a transmission occasion of at least one of the first CG configuration or the second CG configuration.

8. The one or more processors of claim 1, wherein an overlap between the first CG configuration and the second CG configuration is determined based on a superset that contains a transmission occasion of one of the first CG configuration or the second CG configuration, and wherein the superset is applied to only one of the first CG configuration or the second CG configuration.

9. The one or more processors of claim 1, wherein an overlap between the first CG configuration and the second CG configuration is determined based on at least one of network configuration, specification design, or capabilities of the UE.

10. A user equipment (UE) comprising:
one or more processors; and
memory storing instructions that when executed by the one or more processors, cause the UE to perform the operations of any of claims 1 to 9.

11. One or more processors configured to, when executing instructions stored in a memory, perform operations comprising:
instructing radio frequency (RF) circuitry to transmit, to a user equipment (UE), a first configured grant (CG) configuration for an uplink (UL) carrier and a second CG configuration for a supplementary uplink (SUL) carrier, each of the first and second CG configurations comprising multiple transmission occasions;
receiving at least one unused transmission occasion uplink control information (UTO-UCI), the at least one UTO-UCI indicating one or more unused transmission occasions; and
determining, based on the at least one UTO-UCI, which of the multiple transmission occasions are unused by the UE for each of the first CG configuration and the second CG configuration.

12. The one or more processors of claim 11, wherein the at least one UTO-UCI comprises a first UTO-UCI indicating one or more unused transmission occasions for the first CG configuration, and a second UTO-UCI indicating one or more unused transmission occasions for the second CG configuration, wherein the second UTO-UCI is independent of the first UTO-UCI.

13. The one or more processors of claim 11 configured to perform operations further comprising:
receiving a first CG PUSCH transmission in the first CG configuration, the first CG PUSCH transmission including a first UTO-UCI for the first CG configuration;
determining, based on the first UTO-UCI, which of the transmission occasions are unused by the UE for the first CG configuration;
receiving, from the UE, a second CG PUSCH transmission in the second CG configuration, the second CG PUSCH transmissions including a second UTO-UCI that is independent of the first UTO-UCI; and
determining, based on the second UTO-UCI, which of the transmission occasions are unused by the UE for the second CG configuration.

14. The one or more processors of claim 11, wherein the at least one UTO-UCI comprises a first UTO-UCI indicating one or more unused transmission occasions for one of the first CG configuration or the second CG configuration, and wherein the first UTO-UCI restricts which of the transmission occasions the other of the first CG configuration or the second CG configuration can be used by the UE.

15. The one or more processors of claim 11, wherein the first CG configuration at least partially overlaps the second CG configuration, and wherein the overlap is determined:
at an orthogonal frequency division multiplexing (OFDM) symbol level;
at a slot level of the UL carrier or a slot level of the SUL carrier;
based on a union of OFDM symbols sets; or
based on a superset that contains a transmission occasion of at least one of the first CG configuration or the second CG configuration.
